# FASCICULE DE BREVET EUROPEEN

(11) **EP 4 543 212 B1**
(45) Date de publication et mention de la délivrance du brevet: **08.04.2026**
(21) Numéro de dépôt: 23727251.3
(22) Date de dépôt: 10.05.2023
(51) Int. Cl.: A22C 17/00

(54) **DISPOSITIF DE FABRICATION DE BROCHETTES D'ALIMENTS COMPRENANT UN DISPOSITIF DE MAINTIEN D'AU MOINS UNE PIQUE SUR UN EXTRACTEUR MOBILE DE PIQUES SYNCHRONISE AU MOUVEMENT DES PLATEAUX DE RE?CEPTION DES DENREES ALIMENTAIRES**
VORRICHTUNG ZUR HERSTELLUNG VON LEBENSMITTELSPIESSEN MIT EINER VORRICHTUNG ZUR HALTERUNG VON MINDESTENS EINEM SPIESS AUF EINEM BEWEGLICHEN EXTRAKTOR, DER IN BEWEGUNG VON LEBENSMITTELBEHÄLTERN SYNCHRONISIERT WIRD.
DEVICE FOR MANUFACTURING FOOD SKEWERS COMPRISING A DEVICE FOR HOLDING AT LEAST ONE SKEWER ON A MOBILE SKEWER EXTRACTOR SYNCHRONIZED TO THE MOVEMENT OF THE FOOD RECEIVING TRAYS

(30) Priorité: 23.06.2022 FR 2206253
(43) Date de publication de la demande: 30.04.2025
(73) Titulaire: System B, 53810 Change (FR)
(72) Inventeur: BEUCHER, Jérémy, 53960 Bonchamp (FR); LECLERC, Mathis, 53950 LOUVERNE (FR)
(74) Mandataire: Vidon Brevets & Stratégie
(86) Numéro de dépôt international: PCT/EP2023/062479
(87) Numéro de publication internationale: WO 2023/247105

(56) Documents cités:
- WO-A1-2019/092325
- WO-A1-2020/259850
- WO-A1-2022/161977
- DE-U1- 8 915 630
- FR-A1- 3 050 908

## Description

### Domaine de l'invention

L'invention se situe dans le domaine de l'agroalimentaire.

L'invention concerne un appareil de fabrication de brochettes d'aliments comportant deux plateaux mobiles se positionnant l'un sur l'autre en formant des cavités alignées destinées à recevoir des denrées alimentaires.

L'invention concerne plus particulièrement le fait qu'il comporte un mécanisme de transfert et de positionnement de piques dans l'axe des cavités lorsque celles-ci embrochent les denrées alimentaires.

### Art antérieur

La réalisation de brochettes consiste tout d'abord à couper des aliments compacts, tels que des morceaux de viande, des légumes entiers ou coupés, des fruits, des saucisses, des dés de fromage, etc... Ces différentes denrées peuvent être embrochées manuellement sur une pique, les unes après les autres. Les piques peuvent être de simples et minces morceaux de bois allongés et taillés en pointe à une extrémité, en bambou par exemple, ces piques étant généralement jetables. Dans certains cas, l'extrémité non pointue présente un méplat pour une meilleure préhension (ces piques sont appelées piques drapeaux ou golf), ou une tête sculptée présentant un motif.

D'autres piques existent en métal. Elles ont la même forme allongée et peuvent être rectilignes avec une extrémité pointue. Elles peuvent en variante présenter une extrémité pointue, l'autre extrémité présentant une boucle ou un triangle, par exemple, pour faciliter la préhension.

L'opération d'embrochage effectuée à la main est délicate et prend un temps considérable. En effet, il est difficile pour un opérateur de centrer la pique au milieu de morceaux d'aliments qui ne sont pas immobilisés, le risque étant de s'enfoncer la pique dans la main. D'autres part, les aliments ont des consistances, des viscosités et des formes très différentes et donc la force pour les traverser doit être adaptée en conséquence. Enfin, il existe une grande multitude de piques de formes et de diamètre différent qui augmentent la difficulté de l'opération.

Les professionnels disposent de divers appareils de fabrication de brochettes dans lesquelles des denrées alimentaires diverses et variées sont alignées et embrochées sur une pique droite.

Il est notamment connu de la demande de brevet FR 3 076 185, appartenant au demandeur de la présente demande, un dispositif pour la fabrication manuelle de brochettes visant à faciliter l'embrochage des denrées alimentaires sur des piques afin de constituer des brochettes. Un tel dispositif comprend une base fixe et un ensemble mobile monté coulissant sur la base fixe. L'ensemble mobile comprend des plateaux inférieur et supérieur portant au moins un moule et au moins un contre moule respectivement. Lorsque les plateaux sont positionnés l'un sur l'autre, le moule et le contre moule forment des cavités longitudinales aptes à contenir des aliments préalablement disposés sur le moule. La base fixe porte en outre un système de guidage rétractable formé de trois plaques comprenant chacune des encoches ménagées de façon à maintenir les piques de manière coaxiale aux axes des cavités. Une fois les aliments maintenus dans les cavités et les piques placées manuellement dans le système de guidage, l'embrochage des aliments sur les piques est réalisé par le coulissement de l'ensemble mobile vers le système de guidage des piques. Les piques sont ainsi correctement centrées au milieu des aliments. Un tel dispositif est avantageux mais ne donne pas entièrement satisfaction du fait qu'il requiert le positionnement manuel des piques qui peut être chronophage. En effet, après ou avant avoir déposé et positionné les denrées alimentaires dans les cavités dédiées, l'opérateur doit prendre puis positionner une à une les piques d'embrochage dans les encoches du système de guidage. L'opération de positionnement des piques intervient dans le cycle des opérations de traction et de poussée des plateaux et des opérations d'ouverture des plateaux et de retrait des brochettes fabriquées. La répétition de ces actions engendre donc une certaine fatigue musculaire pour l'opérateur qui devient, au filde la fabrication, moins rapide et/ou précis lors de l'exécution de l'opération de positionnement des piques.

Pour remédier à ces inconvénients, le demandeur de la présente demande a proposé un dispositif pour la mise en position automatique d'une ou plusieurs piques en position d'embrochage, minimisant ainsi les interventions de l'opérateur. Dans ce dispositif, des languettes ou lamelles déformables sont chacune aptes à maintenir une pique sur l'extracteur mobile de piques. Toutefois, ces lamelles ne sont pas adaptées pour maintenir de façon fiable différents types de piques, notamment les piques drapeaux ou golf qui présentent de façon connue une extrémité élargie facilitant la prise en main lors de la consommation. Le document WO 2020/259850 A1 décrit un réservoir de piques fixé sur le plateau supérieur et dont le fond comporte une ouverture pour éjecter par gravité une pique, l'éjection s'effectuant lorsque le plateau supérieur est en position arrière, un élément de blocage maintenant immobile la pique lors du déplacement de l'ensemble des plateaux vers l'arrière.

Il existe donc un réel besoin d'un dispositif de fabrication de brochettes permettant de positionner de façon automatique et de maintenir les piques de façon fiable sur l'extracteur quelques soient la forme de ces piques, leur matériau et leur longueur.

### Objectifs de l'invention

L'invention vise à proposer un nouvel appareil de fabrication de brochettes, comportant un moule et un contre moule permettant : - d'immobiliser les denrées alimentaires lors de l'embrochage et de les centrer au milieu de piques de brochettes de tous types, et - la mise en position automatique d'au moins une pique en position d'embrochage et le maintien de cette dernière, minimisant ainsi les interventions de l'opérateur.

### Exposé de l'invention

En vue de résoudre au moins les problèmes mentionnés précédemment, la présente invention propose un dispositif de fabrication d'au moins une brochette d'aliments à partir de plusieurs types de piques, le dispositif comprenant un bâti et un chariot monté mobile en coulissement sur le bâti entre une position avant et une position arrière, et inversement, le chariot mobile comprenant un plateau inférieur coopérant avec un plateau supérieur, formant couvercle, le plateau supérieur étant monté mobile entre une position ouverte et une position fermée (ou rabattue), les plateaux inférieurs et supérieurs présentant des renfoncements de réception de denrées alimentaires formant au moins une rangée de cavités alignées lorsque le plateau supérieur est rabattu sur le plateau inférieur et au moins un orifice de passage d'une pique débouchant dans l'axe de l'au moins une rangée de cavités alignées, l'embrochage de la pique dans les denrées alimentaires logées dans l'au moins une rangée de cavités alignées s'effectuant en déplaçant le chariot mobile de la position arrière (également appelée position reculée) vers la position avant (également appelée position avancée).

Selon l'invention, le dispositif de fabrication de brochettes comprend
- au moins un réservoir de piques et un extracteur mobile de piques configuré pour prélever sélectivement au moins une pique dans ledit au moins un réservoir et pour extraire ladite au moins une pique hors dudit réservoir de sorte à la positionner en position d'embrochage en regard dudit au moins un orifice lorsque le chariot mobile est en position arrière,
- des moyens de synchronisation configurés pour synchroniser le déplacement dudit extracteur mobile de piques au déplacement dudit chariot mobile, et
- des moyens de maintien de ladite au moins une pique sur l'extracteur mobile de piques en position d'embrochage, lesdits moyens de maintien étant mobiles entre une position escamotée où ils ne coopèrent pas avec la pique et la position déployée où ils maintiennent la pique en position d'embrochage, le déplacement desdits moyens de maintien de la pique entre les positions escamotée et déployée étant commandé par le déplacement dudit chariot mobile.

L'invention propose une machine pouvant fabriquer des brochettes d'aliments à partir d'une multitude de types de piques.

Les piques à brochette peuvent être en bois, bambou, plastique alimentaire ou métal, et peuvent être rectilignes sans tête ou bien présenter une tête d'extrémité de géométrie particulière (drapeau, anneau, triangle,...). La section des piques peut être carrée, rectangulaire, ronde ou ovale notamment. Plusieurs types de piques peuvent être utilisées durant une même session d'embrochage.

Les moyens d'extraction sont configurés pour extraire et placer en position d'embrochage plusieurs sections de piques différentes et les moyens de maintien sont configurés pour maintenir n'importe quel type de pique en position d'embrochage. C'est l'ensemble de ces moyens d'extraction et de maintien qui, du fait qu'ils sont synchronisés aux mouvements du chariot mobile, permettent à la machine de fonctionner quel que soit le type de pique utilisé par l'opérateur.

Selon un aspect particulier de l'invention, les moyens de maintien comprennent au moins un doigt de maintien situé au-dessus de ladite au moins une pique en position d'embrochage.

Selon une mise en œuvre particulière, les moyens de maintien qui sont aptes à maintenir au moins une pique sur l'extracteur mobile de piques en position haute dudit extracteur mobile de piques prennent la forme d'un doigt déformable monté sur un levier mobile et qui se positionne au-dessus du pique de sorte à le maintenir dans la gorge d'une lame de l'extracteur mobile.

Un ressort permet de garder le levier et le doigt en position haute suivant la position du chariot mobile.

Le but de ce mécanisme est d'actionner un sous-ensemble suivant la position du chariot mobile et en particulier du plateau inférieur de telle sorte que le doigt de maintien atteigne sa position haute avant que la pique sélectionnée par l'extracteur mobile n'arrive en position haute.

Le doigt déformable constitue donc un doigt d'arrêt du pique en fin de course de l'extracteur mobile qui est apte à maintenir la pique sur l'extracteur mobile de piques en position haute de ce dernier.

Ce doigt permet d'assurer le maintien en position de la pique afin d'éviter qu'elle soit éjectée accidentellement lors de la fin de la phase de recul du chariot mobile, et donc lorsque l'extracteur mobile de pique arrive en position haute. Il a en effet été constaté par les inventeurs que le dispositif de fabrication de brochettes était sujet aux vibrations principalement lorsque le chariot mobile et/ou l'extracteur mobile de piques entrent en contact avec les butées de fin de course.

La mise en œuvre de ce doigt de maintien permet à l'opérateur de travailler rapidement et de façon fluide, sans qu'il soit nécessaire qu'il modifie son geste et sans craindre la chute d'une pique. Contrairement aux machines de l'art antérieur, il n'est en effet pas nécessaire que l'opérateur doive décélérer le déplacement du chariot mobile lorsqu'il pousse ou tire le chariot et qu'il veut éviter que le chariot ne percute trop violemment les butées de fin de course pour réduire les vibrations pouvant causer la chute d'une pique.

La mise en œuvre d'un ou plusieurs doigts (en fonction du nombre de piques) permet d'optimiser le fonctionnement du dispositif en évitant d'interrompre le processus de fabrication pour assurer un repositionnement manuel d'une pique qui serait tombée et permet à l'opérateur d'utiliser le dispositif de manière dynamique sans avoir à ajuster ou contrôler la façon de pousser ou tirer le chariot mobile.

Muni d'un ressort, le système de doigt peut être mis en mouvement suivant où se situe le point de contact entre le levier et le plateau inférieur. A une extrémité du levier, est fixé le doigt qui est fabriqué dans une matière relativement souple, de type élastomère ou silicone.

Ce doigt permet en outre de maintenir en position stable la pique sur l'extracteur mobile de piques jusqu'à ce que la pique commence à s'introduire dans les cavités comprenant les denrées alimentaires.

Le système fonctionne pour tout type de piques (bois, bambous, métal, etc.) et toute formes de pique. Quelle que soit la longueur des piques, il n'y a pas de réglage à effectuer, pas de changement de pièce pour les longueurs de piques de 200mm à 250mm qui sont utilisable sur cette machine. Le système fonctionne également pour toutes les formes de pique, de section ronde ou carrée.

L'extracteur de piques, au sens de la technique proposée, est un élément mobile qui assure le retrait ou dégagement d'au moins une pique du réservoir. Pour ce faire, l'extracteur mobile de piques s'engage donc au moins partiellement, et temporairement, à l'intérieur du réservoir pour prélever une pique, puis pour l'extraire hors du réservoir.

Un dispositif de fabrication de brochettes d'aliments présentant de tels moyens de synchronisation du déplacement de l'extracteur mobile de piques au déplacement du chariot mobile, permet la mise en place automatique des piques en position d'embrochage. Avec un dispositif conforme à la technique proposée, excepté pour disposer les denrées alimentaires dans les cavités et récupérer les brochettes fabriquées, l'opérateur garde avantageusement sa ou ses mains sur les poignées du chariot mobile durant tout le processus de fabrication. Ceci est avantageux par rapport à l'art antérieur dans lequel la dépose manuelle des piques est chronophage et nécessite une attention particulière de la part de l'opérateur.

Le déplacement de l'extracteur mobile de piques étant réalisé pendant le déplacement du chariot mobile (car lié à celui-ci), la mise en place des piques est par ailleurs immédiate en ce sens qu'elle n'engendre aucune interruption, ou une interruption négligeable, dans la manipulation du chariot mobile. Cela se traduit donc notamment par un accroissement des cadences de fabrication et par une amélioration du confort et des conditions de travail de l'opérateur.

Par ailleurs, la mise en place automatique des piques en position d'embrochage est réalisée par le dispositif de fabrication de brochettes lui-même. Cela permet au dispositif d'être autonome, c'est-à-dire de ne pas dépendre d'une installation extérieure dédiée à la mise en position des piques. Le dispositif est ainsi aisément transportable et, dès lorsqu'il est installé, rapidement utilisable.

Selon un aspect particulier de l'invention, lors de l'embrochage, lorsque le chariot mobile est déplacé de la position arrière vers la position avant et lesdits moyens de maintien passent de la position déployée à la position escamotée, le doigt de maintien se déforme pour passer sous la pique.

Avantageusement, le doigt de maintien présente une portion flexible en matériau souple.

Selon une variante, le doigt de maintien est en plusieurs parties articulées.

Selon un aspect particulier de l'invention, le doigt de maintien est monté sur un levier pivotant qui est maintenu en position déployée par au moins un élément à ressort lorsque le chariot mobile est dans la position arrière et qui est commandé en déplacement de sa position déployée à sa position escamotée par contact avec le plateau inférieur du chariot mobile lorsque le chariot mobile est déplacé de la position arrière vers la position avant.

Selon un aspect particulier de l'invention, ledit extracteur mobile de piques est monté mobile en coulissement sur le bâti entre une position basse et une position haute, l'extraction et le positionnement des piques en regard dudit au moins un orifice ou en position d'embrochage s'effectuant par le déplacement dudit extracteur mobile de piques de la position basse vers la position haute,

et en ce que lesdits moyens de synchronisation sont configurés pour synchroniser :
- la montée dudit extracteur mobile de piques de la position basse vers la position haute avec le déplacement dudit chariot mobile de la position avant vers la position arrière, correspondant à un recul du chariot mobile, les moyens de maintien étant pilotés de leur position escamotée vers leur position déployée par le déplacement dudit chariot mobile de la position avant vers la position arrière avant que l'extracteur mobile de piques atteigne la position haute, et
- la descente dudit extracteur mobile de piques de la position haute vers la position basse avec le déplacement dudit chariot mobile de la position arrière vers la position avant, correspondant à un avancement dudit chariot mobile, les moyens de maintien étant pilotés de leur position déployée vers leur position escamotée par le déplacement dudit chariot mobile de la position arrière vers la position avant une fois que l'extracteur mobile de piques descend de la position haute vers la position basse.

Selon un aspect particulier de l'invention, ledit extracteur mobile de piques comprend en outre au moins une lame d'extraction d'une pique présentant sur sa face supérieure une gorge de réception et de maintien d'une pique du réservoir, la gorge comprenant sur chacun de ses côtés un rebord incliné vers l'extérieur de la gorge.

La mise en œuvre d'une lame, qui est un élément mince, permet d'éviter que d'autres piques présentes dans le réservoir restent en équilibre sur une portion de la lame d'extraction ou sur la pique engagée sur la lame en question. Par ailleurs, la mise en œuvre d'une gorge et de rebords sur la partie supérieure de la lame permet de minimiser le risque que la pique extraite par la lame retombe dans le réservoir lors de la manipulation du dispositif par l'opérateur. Ceci permet également à la lame de porter différentes sections de piques.

Selon un aspect particulier de l'invention, la lame d'extraction présente une encoche de réception de la tête d'une pique en forme de drapeau.

Ceci permet aux piques avec tête d'être sélectionnées dans le réservoir, la lame étant également adaptée pour sélectionner des piques sans tête.

Selon un aspect particulier de l'invention, ledit bâti comprend un module de butées réversible présentant sur chacune de ses deux faces, un type particulier de butée de positionnement d'une pique contre laquelle la pique, disposée dans la gorge de réception et de maintien de ladite au moins une lame d'extraction en position haute dudit extracteur mobile de piques, vient en appui en début d'embrochage de la pique dans les denrées alimentaires logées dans ladite au moins une rangée de cavités alignées.

Les butées de positionnement permettent, après l'initiation de l'opération d'embrochage, d'immobiliser la base de la pique afin d'empêcher qu'elle ne se désaxe, voire qu'elle ne rompt ou soit éjectée. Cela permet notamment d'éviter que l'opérateur soit dans l'obligation de repositionner ou remplacer manuellement la pique. Cela permet en outre de minimiser le risque de détérioration du dispositif de fabrication de brochettes, si par exemple un éclat d'une pique venait à se bloquer dans les moyens de synchronisation.

Selon un aspect particulier de l'invention, le levier et le ressort sont montés dans une paroi latérale dudit au moins un réservoir de piques, ledit levier étant logé dans ladite paroi latérale en position escamotée.

Selon un aspect particulier de l'invention, le réservoir de piques comprend au moins un compartiment pourvu d'un fond présentant deux surfaces inclinées convergeant dans la partie la plus basse du compartiment vers une fente de réception d'une lame d'extraction en position basse, les extrémités inférieures des deux surfaces inclinées étant décalées d'une hauteur prédeterminée.

Le différentiel de hauteur des pentes dans le réservoir permet de garantir la sélection d'une pique au fond du réservoir, notamment pour les piques avec tête.

Selon un aspect particulier de l'invention, l'extracteur mobile de piques est monté mobile en coulissement sur le bâti entre une position basse et une position haute, et inversement, l'extraction et le positionnement des piques en regard de l'au moins un orifice s'effectuant en déplaçant l'extracteur mobile de piques de la position basse vers la position haute. En outre, les moyens de synchronisation sont configurés pour synchroniser :
- la montée de l'extracteur mobile de piques de la position basse vers la position haute avec le déplacement du chariot mobile de la position avant vers la position arrière, correspondant à un recul du chariot mobile, et
- la descente de l'extracteur mobile de piques de la position haute vers la position basse avec le déplacement du chariot mobile de la position arrière vers la position avant, correspondant à un avancement du chariot mobile.

Le mouvement aller-retour horizontal des plateaux permet de faire monter et descendre la ou les lames qui sélectionnent la ou les piques dans le réservoir de piques. En d'autres termes, les étapes consistant à pousser les plateaux à l'écart de l'opérateur et à tirer les plateaux vers l'opérateur sont synchronisées avec la montée et descente du système de sélection des piques.

Un tel agencement, particulièrement avantageux lorsque le réservoir de piques est situé en-dessous du chariot mobile, permet de minimiser l'encombrement du dispositif de fabrication de brochettes. Ainsi, le dispositif peut être aisément transporté. Il peut également être facilement entreposé et/ou installé dans des espaces de stockage et/ou de travail relativement confinés.

Selon un aspect particulier de l'invention, les moyens de synchronisation comprennent au moins un levier de synchronisation monté pivotant sur le bâti et présentant :
- une première extrémité reliée à l'extracteur mobile de piques, et
- une deuxième extrémité, supportant un deuxième galet disposé à l'intérieur d'une piste de synchronisation ménagée sur le chariot mobile, la piste de synchronisation présentant une première extrémité, associée à la position basse de l'extracteur mobile de piques, et une deuxième extrémité, associée à la position haute de l'extracteur mobile de piques.

De tels moyens mécaniques de synchronisation permettent d'assurer une synchronisation précise et efficace du déplacement de l'extracteur mobile de piques avec le déplacement du chariot mobile. L'absence de moyens électroniques permet en outre à un dispositif comprenant de tels moyens de synchronisation d'être utilisé dans un environnement de travail froid et/ou humide notamment en minimisant le risque de pannes et/ou de dysfonctionnement par exemple. De tels moyens mécaniques de synchronisation sont par ailleurs simples de conception et donc simples à entretenir.

Selon un aspect particulier de l'invention, le levier de synchronisation présente à sa première extrémité une lumière oblongue coopérant avec un premier galet porté par l'extracteur mobile de piques de sorte à ce que le pivotement du levier de synchronisation entraîne le déplacement du premier galet et le déplacement de l'extracteur mobile de piques entre les positions haute et basse, et inversement.

Une telle structure du levier de synchronisation constitue une solution simple et efficace pour obtenir un guidage fluide, non saccadé donc, et précis de l'extracteur mobile de piques entre les positions haute et basse, et inversement. Cela diminue notamment le risque d'éjection non souhaitée des piques de l'extracteur mobile de piques lors de la montée de ce dernier.

Selon un aspect particulier de l'invention, la piste de synchronisation comprend des premier et deuxième chemins s'étendant entre les première et deuxième extrémités de la piste de synchronisation, le premier chemin étant configuré pour être emprunté par le deuxième galet lors du recul du chariot mobile le deuxième chemin tant configuré pour être empruntée par le deuxième galet lors de l'avancement du chariot mobile.

Une telle configuration de la piste de synchronisation permet d'éviter que la pique portée par l'extracteur mobile de piques heurte le chariot mobile tout en permettant à l'extracteur mobile de piques de maintenir en position stable la pique jusqu'à ce qu'elle commence à s'introduire dans les cavités comprenant les denrées alimentaires. On s'affranchit ainsi de la mise en œuvre d'un système dédié de guidage et de positionnement de la pique conformément aux solutions antérieures. Cela permet notamment de simplifier la construction du dispositif.

Selon un aspect particulier de l'invention, le dispositif de fabrication comprend au moins un volet d'obturation unidirectionnel autorisant le déplacement du deuxième galet à l'intérieur du premier chemin lors du recul du chariot mobile et empêchant le déplacement du deuxième galet à l'intérieur du premier chemin lors de l'avancement du chariot mobile pour guider le deuxième galet dans le deuxième chemin.

Selon un autre aspect particulier de l'invention, la lame d'extraction d'une pique est disposée à l'intérieur d'une fente ménagée dans le fond du réservoir de piques lorsque l'extracteur mobile de piques est en position basse, la lame d'extraction présentant une portion inférieure disposée à l'intérieur de la fente lorsque l'extracteur mobile de piques est en position haute.

Une telle portion inférieure permet d'éviter, en l'absence de la lame d'extraction dans la fente, que les piques présentes dans le réservoir s'échappent de celui-ci par les fentes sous l'effet de la gravité, ou que des piques non utilisées bloquent la descente de la lame d'extraction. Une telle portion inférieure permet ainsi de minimiser le risque d'accident pour l'opérateur, en évitant qu'il chute après avoir marché sur des piques tombées au sol par exemple, et de minimiser le risque de dysfonctionnement, voire de détérioration, du dispositif de fabrication de brochettes.

Selon un autre aspect particulier de l'invention, les renfoncements des plateaux inférieur et supérieur supportent respectivement au moins un moule et au moins un contre moule réalisé en un matériau souple.

Cela permet de ne pas détériorer les denrées alimentaires disposées dans les cavités.

Préférentiellement, les moule(s) et contre moule(s) sont fabriqués en silicone.

### Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig.1A], [Fig.1B] et [Fig.1C] représentent, selon des vues en perspective et dans différentes positions, un exemple de dispositif de fabrication de brochettes selon un mode de réalisation de la technique proposée ;
[Fig.2] représente, selon une vue partielle en perspective, un exemple d'extracteur mobile de piques monté sur le bâti du dispositif de fabrication de brochettes selon les figures 1A à 1C ;
[Fig.3A], [Fig.3B], [Fig.3C] et [Fig.3D] représentent, selon des vues partielles en perspective, un exemple de moyens de synchronisation d'un dispositif de fabrication de brochettes selon les figures 1A à 1C ;
[Fig.4A] et [Fig.4B] sont des vues de détails d'un exemple de volet d'obturation unidirectionnel monté dans une piste de synchronisation faisant partie des moyens de synchronisation des figures 3A à 3D ;
[Fig.5A], [Fig.5B], [Fig.5C] et [Fig.5D] illustrent le fonctionnement du volet d'obturation unidirectionnel des figures 4A et 4B ;
[Fig.6] représente, selon une vue en perspective, un exemple de réservoir de piques du dispositif de fabrication de brochettes selon les figures 1A à 1C ;
[Fig.7A] et [Fig.7B] montrent deux positions d'une lame d'extraction de piques de l'extracteur mobile de piques selon la [Fig.2] dans le réservoir de piques selon la [Fig.6] ;
[Fig.8A] et [Fig.8B] montrent le dispositif de fabrication de brochettes en position d'embrochage des piques ;
[Fig.9A] est une vue d'une partie du réservoir de piques avec un levier portant un doigt de maintien d'une pique en position déployée ;
[Fig.9B] est une vue partielle du dispositif de fabrication de brochettes ;
[Fig.9C] illustre un exemple de doigt de maintien d'une pique ;
[Fig.10A] à [Fig.10G] décrivent la phase de sélection des piques dans le réservoir du dispositif de fabrication de brochettes ;
[Fig.11A] à [Fig.11F] décrivent la phase d'embrochage de denrées sur les piquessurvenant après la phase de sélection des piques ;
[Fig.12], [Fig.13], [Fig.14], [Fig.15] et [Fig.16] sont des vues du dispositif de fabrication de brochettes dans différentes positions de fonctionnement ;
[Fig.17] est une vue de détails du dispositif de fabrication de brochettes montrant une forme particulière de lame d'extraction de pique ;
[Fig.18] montre le module de butées réversible du dispositif de fabrication de brochettes dans ses deux positions et le profil des deux types de butées ;
[Fig.19] illustre avec différentes vues référencées a) à d) la déformation du doigt flexible de maintien d'une pique lors de l'opération d'embrochage de denrées sur la pique ;
[Fig.20] comprend plusieurs vues de la gorge de réception d'une pique ménagée sur une lame d'extraction coopérant avec différents types de piques ;
[Fig.21] à [Fig.26] montrent chacune la mise en place d'un type particulier de pique dans la gorge d'une lame d'extraction du dispositif de fabrication de brochettes de l'invention.

### Description d'un mode de réalisation de l'invention

Par souci de clarté, de mêmes éléments ont été désignés par de mêmes références sur les différentes figures.

Par ailleurs, on utilise dans la présente description les termes d'orientation et de positionnement "inférieur", "supérieur", "avant", "arrière", etc. en se référant arbitrairement à une position normale d'utilisation d'un dispositif de fabrication de brochettes, dans laquelle deux plateaux se positionnant l'un sur l'autre sont mobiles dans un plan approximativement parallèle au sol (horizontal) et coulissent entre une position proximale (avant) et distale (arrière) par rapport à des butées de positionnement des piques dans les plateaux. Lors de l'utilisation d'un tel dispositif, l'opérateur est situé du côté des butées de positionnement, c'est-à-dire à gauche sur les figures.

### Principe général

L'invention concerne un dispositif de fabrication d'une ou de plusieurs brochettes. Un tel dispositif comprend un bâti et un chariot mobile monté mobile en coulissement sur le bâti entre une position avant et une position arrière, et inversement. Le chariot mobile comprend un plateau inférieur coopérant avec un plateau supérieur, formant couvercle. Le plateau supérieur est monté mobile entre une position ouverte et une position fermée ou rabattue. Les plateaux inférieur et supérieur présentent des renfoncements de réception de denrées alimentaires formant une ou plusieurs rangées de cavités alignées lorsque le plateau supérieur est rabattu sur le plateau inférieur et un orifice de passage d'une pique débouchant dans l'axe de chaque rangée de cavités alignées. L'embrochage des piques dans les aliments logés dans les cavités alignées s'effectue en déplaçant le chariot mobile de la position arrière vers la position avant. Le dispositif comprend en outre un réservoir de piques, et un extracteur mobile de piques configuré pour extraire sélectivement une ou plusieurs piques du réservoir. Pour ce faire, l'extracteur est configuré pour s'introduire au moins partiellement et temporairement dans le réservoir afin de prélever et d'extraire une ou plusieurs piques de celui-ci, et positionner la ou les piques en regard de l'orifice de passage correspondant lorsque le chariot mobile est en position arrière.

Le dispositif comprend également des moyens de synchronisation configurés pour synchroniser le déplacement de l'extracteur mobile de piques au déplacement du chariot mobile.

Le dispositif comprend en outre un doigt qui est porté par un levier mobile entre une position escamotée et une position déployée où il est situé au-dessus d'une pique en contact avec cette dernière pour la maintenir sur l'extracteur de piques avant et pendant l'embrochage. La position du levier portant le doigt de maintien est pilotée par la position du plateau inférieur du chariot mobile, ce dernier agissant ainsi comme une came commandant le déplacement du levier du doigt de maintien.

De cette manière, le mouvement d'avant en arrière du chariot mobile permet d'extraire des piques hors du réservoir par le biais de l'extracteur mobile et de les placer en position pour l'embrochage tout en déployant le levier pour que le doigt maintienne le pique sur l'extracteur mobile. Le mouvement d'arrière en avant de ce même chariot mobile permet l'embrochage des denrées disposées entre les plateaux sur les piques tout en escamotant le levier, et donc le doigt, vers sa position escamotée.

Ce mouvement d'avant en arrière du chariot mobile, et inversement, est assuré par un opérateur à l'aide de poignées disposées sur le chariot mobile. Sans retirer ses mains des poignées, l'opérateur peut d'une part extraire automatiquement des piques du réservoir en repoussant le chariot mobile (cette étape étant assurée par l'extracteur qui traverse le réservoir et prélève au passage une ou plusieurs piques pour les extraire hors du réservoir), puis embrocher les aliments sur les piques ainsi extraites en ramenant le chariot mobile vers lui.

En d'autres termes, certaines étapes du fonctionnement du dispositif de fabrication de brochettes sont réalisées de manière simultanée, et notamment le mouvement du chariot mobile qui est synchronisé au déplacement des piques stockés dans le réservoir. L'opérateur n'est plus contraint de positionner manuellement des piques en regard des plateaux avant l'embrochage.

Cela se traduit donc par une simplification de l'utilisation du dispositif de fabrication de brochettes et une amélioration de la productivité.

### Description d'un mode de réalisation

### Dispositif de fabrication de brochettes

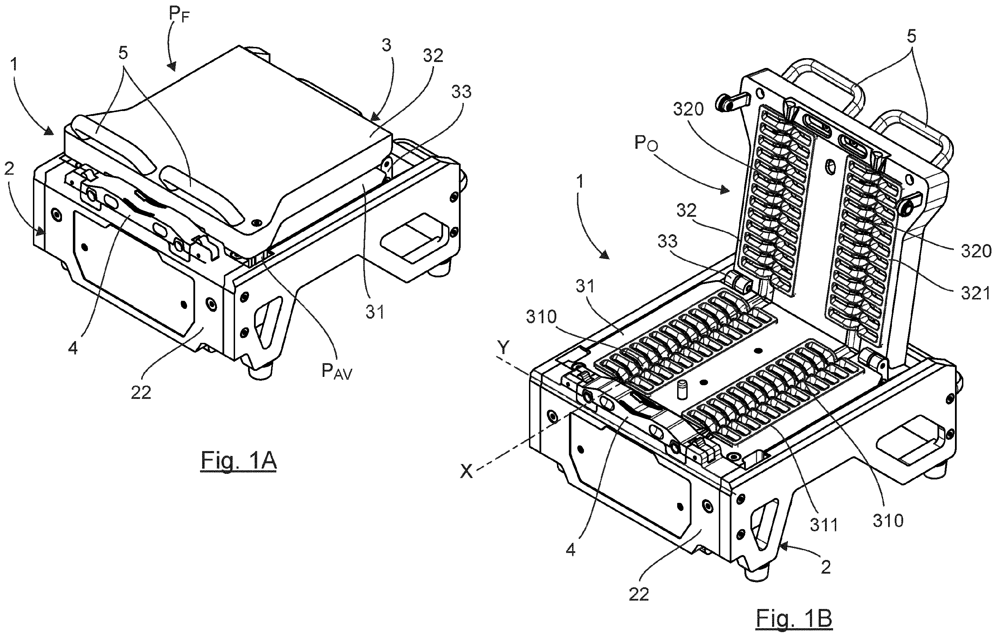

Les figures 1A à 1C présentent en perspective, selon différentes vues, un exemple de dispositif de fabrication de brochettes dans lequel les déplacements a) d'un extracteur mobile de piques, configuré pour prélever et extraire des piques d'un réservoir du dispositif et placer les piques extraites en position d'embrochage de denrées alimentaires, et b) d'un doigt de maintien d'une pique en position d'embrochage sur l'extracteur mobile de piques, sont synchronisés au déplacement d'un chariot mobile portant des plateaux pivotants, conformément a la technique proposée.

Le dispositif 1 de fabrication de brochettes comprend un bâti 2 équipé de pieds destinés à poser le dispositif 1 sur une surface, horizontale de préférence. Le bâti 2 comprend en outre un espace vide rectangulaire (non référencé) destiné à recevoir d'autres éléments du dispositif comme nous le verrons plus en détails par la suite.

Le dispositif 1 comprend par ailleurs un chariot mobile 3 comprenant un premier plateau 31, dit plateau inférieur ou bas, et un deuxième plateau 32, dit plateau supérieur ou haut. Le plateau inférieur 31 est disposé dans l'espace vide rectangulaire du bâti 2. Le plateau supérieur 32, formant couvercle, est monté pivotant sur le chariot mobile 3, par l'intermédiaire d'une charnière 33, entre une position fermée P_{F} ou rabattue, représentée en [Fig.1A], et une position ouverte PO, représentée en figures 1B notamment.

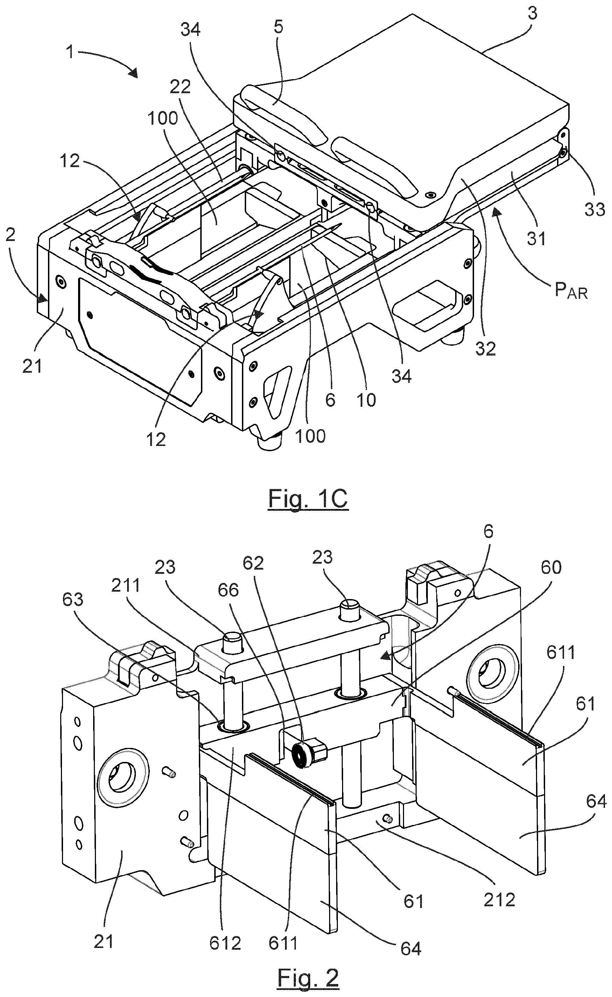

Les plateaux inférieur et supérieur 31, 32 présentent respectivement des renfoncements 310, 320 de réception de denrées alimentaires formant, lorsque le plateau supérieur 32 est rabattu sur le plateau inférieur 31, des rangées parallèles de cavités alignées. Chaque renfoncement, et donc chaque cavité formée par la superposition de deux renfoncements appartenant respectivement aux plateaux inférieur et supérieur, s'étend longitudinalement selon un axe X. L'axe X définit en outre l'axe longitudinal du dispositif 1. En outre, les plateaux inférieur et supérieur 31, 32 présentent respectivement sur un de leurs bords des encoches complémentaires formant, lorsque le plateau supérieur 32 est rabattu sur le plateau inférieur 31, des orifices 34 de passage d'une pique 6 de brochette. Chaque orifice 34 est orienté selon l'axe longitudinal X d'une cavité et débouche à l'intérieur de celle-ci, tel qu'illustré en relation avec la [Fig.1C] notamment.

Par ailleurs, le chariot mobile 3 est monté coulissant sur le bâti 2 selon l'axe longitudinal X entre une position avant P_{AV} et une position arrière P_{AR}, et inversement.

En position avant P_{AV}, telle qu'illustrée en relation avec la [Fig.1A] notamment, le chariot mobile 3 est sensiblement plaqué contre des butées de positionnement 41, 42 des piques, du côté de l'utilisateur. Ces butées de positionnement 41, 42 des piques 6 sont portées par la paroi avant 21 du bâti 2 du côté duquel l'utilisateur se positionne pour manœuvrer le dispositif 1.

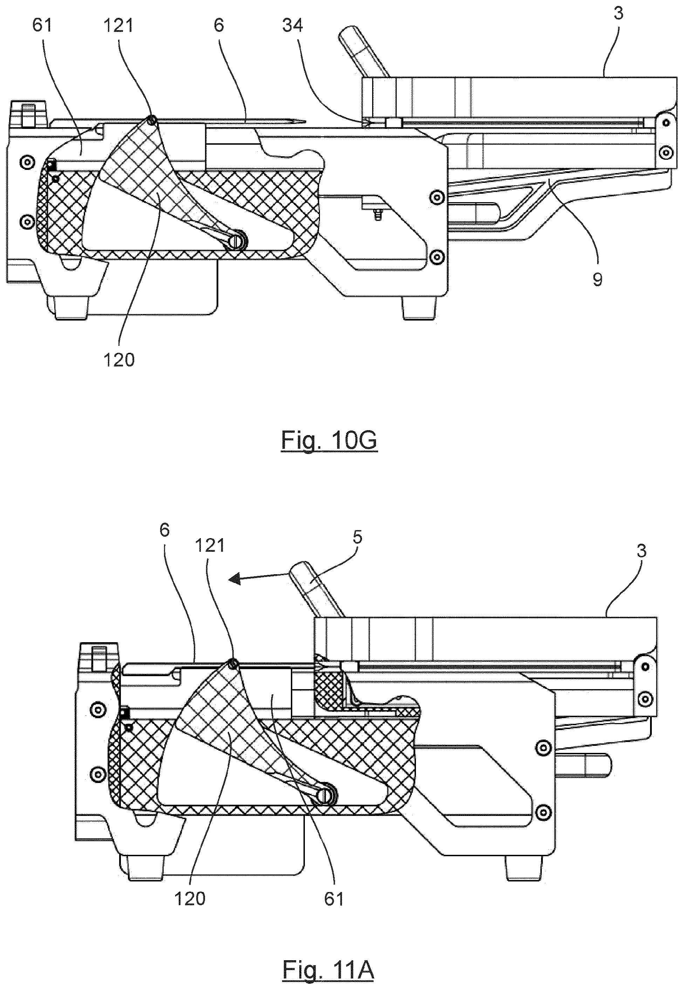

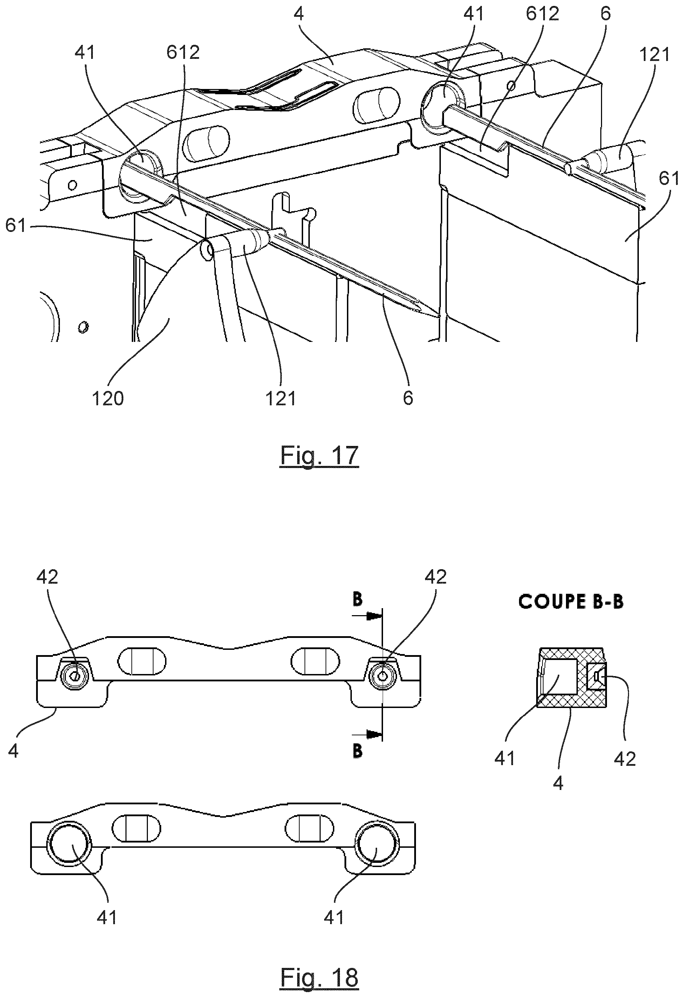

Ces butées de positionnement des piques sont visibles sur les figures 11A à 11E et sont portées par un module de butées 4 qui est décrit en relation avec les figures 17 et 18. Le montage du module de butées 4 sur le bâti 2 est réversible. Il comprend sur une première face deux butées de positionnement 41 pour des piques drapeau et sur la deuxième face, opposée à la première face, deux butées de positionnement 42.

On comprend qu'une seule butée pourrait être mise en œuvre sur chaque face du module de butée si le dispositif ne mettait en œuvre qu'une unique lame d'extraction, et que plus de deux butées pourraient être mises en œuvre sur chaque face du module de butée selon une autre mise en œuvre particulière.

Les butées de positionnement 41, 42 prennent chacune la forme d'une cavité dans laquelle la tête de la pique (lorsque la pique est une pique avec tête (exemple drapeau, triangle, ...) ou l'extrémité sans tête d'un pique rectiligne sans tête vient se loger respectivement.

Les butées de positionnement 41, 42 sont configurées pour immobiliser la base des piques (avec ou sans tête), c'est-à-dire l'extrémité de la pique 6 opposée à la pointe, de manière à empêcher le déplacement non souhaité des piques selon l'axe longitudinal X et l'axe transversal Y lors de l'opération d'embrochage des denrées disposées dans les cavités du chariot mobile sur les piques. Lorsque le chariot mobile 3 est déplacé par l'opérateur à l'aide de poignées de la position arrière P_{AR} vers la position avant P_{AV}, c'est-à-dire lorsque l'opérateur tire le chariot mobile 3 vers lui, les denrées alimentaires sont ainsi embrochées sur les piques 6.

En position arrière P_{AR}, telle qu'illustrée en relation avec la [Fig.1C] notamment, le chariot mobile 3 est éloigné des butées de positionnement 41, 42 d'une distance supérieure à la longueur des piques 6 de manière à permettre le positionnement d'une pique 6 extraite du réservoir en regard de chacun des orifices 34 du chariot mobile 3. L'embrochage des aliments logés dans les cavités du chariot mobile 3 sur les piques 6 s'effectue donc en déplaçant le chariot mobile 3 de la position arrière P_{AR} vers la position avant P_{AV}.

Le dispositif 1 de fabrication de brochettes comprend en outre deux poignées 5 placées à l'avant du plateau supérieur 32, c'est-à-dire à l'opposé à la charnière 33. Les poignées 5 permettent d'animer le pivotement du plateau supérieur 32 ainsi que le coulissement du chariot mobile 3 par rapport au bâti 2. De manière alternative, le dispositif peut comprendre une unique poignée des lors qu'elle permet d'assurer les opérations précitées.

Par ailleurs, le dispositif 1 comprend un réservoir 10 de piques non utilisées qui s'étend selon l'axe longitudinal X du dispositif 1. Le réservoir 10 est disposé à l'intérieur de l'espace vide rectangulaire du bâti 2, au-dessous du plateau inférieur 31 du chariot mobile 3.

Le dispositif 1 comprend en outre un extracteur mobile de piques, configuré pour prélever et extraire sélectivement des piques 6 du réservoir 10 dans un premier temps, puis pour positionner une pique 6 extraite hors du réservoir en regard de chacun des orifices 34 lorsque le chariot mobile 3 est en position arrière P_{AR}. Le dispositif 1 comprend par ailleurs des moyens de synchronisation configurés pour synchroniser le déplacement de l'extracteur mobile de piques au déplacement du chariot mobile 3. L'extracteur mobile de piques et les moyens de synchronisation, non visibles sur les figures 1A, 1B et 1C, seront décrits en détail par la suite.

Dans l'exemple de réalisation illustré en relation avec les différentes figures annexées, le dispositif 1 comprend deux cavités alignées de réception de produits alimentaires, qui sont formées par les renfoncements 310, 320, et est ainsi conçu pour fabriquer deux brochettes en même temps. Ce chiffre n'est donné qu'à titre d'exemple, le dispositif selon l'invention pouvant aussi être adapté à la fabrication d'une seule brochette ou trois ou neuf, ou un nombre quelconque, en fonction notamment du nombre de cavités alignées de réception de produits alimentaires prévues dans le chariot mobile 3. De préférence, les renfoncements 310, 320 des plateaux inférieur et supérieur 31, 32 supportent respectivement un moule 311 et un contre moule 321 amovibles réalisés en un matériau souple, tel du silicone ou un élastomère thermoplastique, afin de ne pas détériorer les denrées alimentaires lors de l'opération d'embrochage. La dureté du matériau souple est déterminée de manière à assurer un maintien correct des denrées alimentaires tout en préservant l'intégrité de ces dernières.

La charnière 33 de rotation du plateau supérieur 32 est disposée à l'arrière du chariot mobile 3 de manière à simplifier la manipulation du dispositif 1.

Le chariot 3 est monté mobile en coulissement sur le bâti 2 par le biais de deux glissières 22 portées par le bâti 2. Les glissières 22 sont formées par deux tiges, s'étendant selon l'axe longitudinal X du dispositif 1, disposées à l'intérieur de l'espace vide rectangulaire du bâti 2 au-dessous du plateau inférieur 31 du chariot mobile 3. Les extrémités longitudinales de chaque tige 22 sont solidarisées de part et d'autre du bâti 2, à savoir à la paroi avant 21, formant une butée avant de coulissement, et à une paroi arrière (non visible), formant une butée arrière de coulissement.

Par ailleurs, de façon avantageuse, le dispositif 1 comprend des doigts de maintien 121 aptes à maintenir chacun une pique sur l'extracteur mobile de piques. Ces doigts de maintien 121 sont chacun portés par un levier mobile 120 dont le mouvement est synchronisé également au déplacement du chariot mobile 3. Ces moyens de maintien, davantage visibles en figures 1C, 6, 9A, 9B et 17notamment, seront décrits en détails par la suite.

### Extracteur mobile de pique(s)

La [Fig.2] présente une partie du dispositif de fabrication de brochettes et en particulier un extracteur mobile de piques monté de manière coulissante sur le bâti du dispositif.

L'extracteur mobile de piques 6 est, selon l'exemple illustré, monté mobile en coulissement sur le bâti 2 entre une position basse et une position haute, et inversement de manière à ce que l'extraction et le positionnement des piques (non représentés sur cette figure) en regard des orifices du chariot mobile s'effectuent en déplaçant l'extracteur mobile de piques 6 depuis la position basse vers la position haute.

Des lames d'extraction 61, portées par l'extracteur mobile de piques 6, assurent le prélèvement et l'extraction des piques stockées dans le réservoir puis le positionnement de ces piques en regard des orifices du chariot 3 mobile. L'extracteur mobile de piques 6 présente autant de lames d'extraction 61 que de rangées de cavités ménagées dans le chariot mobile 3. Les lames d'extraction 61 présentent une longueur plus courte que la longueur des piques pour éviter tout contact des lames avec le chariot mobile 3 lors du fonctionnement du dispositif. Ces lames d'extraction 61 sont configurées de telle sorte à pouvoir traverser le réservoir de piques.

En outre, l'extracteur mobile de piques 6 porte un premier galet 62 faisant partie des moyens de synchronisation des déplacements de l'extracteur mobile de piques 6 et du chariot mobile 3 qui seront détaillés par la suite.

Tel qu'illustré, l'extracteur mobile de piques 6 comprend un corps principal, sensiblement de forme parallélépipédique rectangle, également appelé traverse 60, monté mobile en coulissement sur le bâti 2.

Pour ce faire, l'extracteur mobile de piques 6 présente deux trous traversant 63 configurés pour coopérer avec deux glissières 23 verticales portées par la paroi avant 21 du bâti 2. Les glissières sont formées par deux tiges 23 verticales dont les extrémités longitudinales sont solidarisées de part et d'autre de la paroi avant 21 du bâti 2, à savoir à une partie supérieure 211, formant une butée supérieure de coulissement, et à une partie inférieure 212, formant une butée inférieure de coulissement.

Dans l'exemple décrit ici, l'extracteur mobile de piques 6 comprend deux lames d'extraction 61 parallèles faisant perpendiculairement saillie de la traverse 60 et étant orientées selon l'axe longitudinal X du dispositif 1 en direction du chariot mobile 3.

La tranche de chaque lame d'extraction 61 présente une épaisseur correspondant sensiblement au diamètre des piques 6 de sorte à s'assurer que chaque lame d'extraction 61 saisisse une seule pique à la fois au sein du réservoir pour ensuite l'extraire hors du réservoir. En effet, une telle épaisseur permet d'éviter que d'autres piques du réservoir restent en équilibre sur une portion de la lame d'extraction ou sur la pique engagée sur la lame. Un tel agencement permet en outre de limiter le nombre de piques déplacées dans les compartiments du réservoir lors de la montée et de la descente des lames au sein de ces piques. Cela se traduit donc pas une diminution du risque d'éjection des piques en dehors du réservoir.

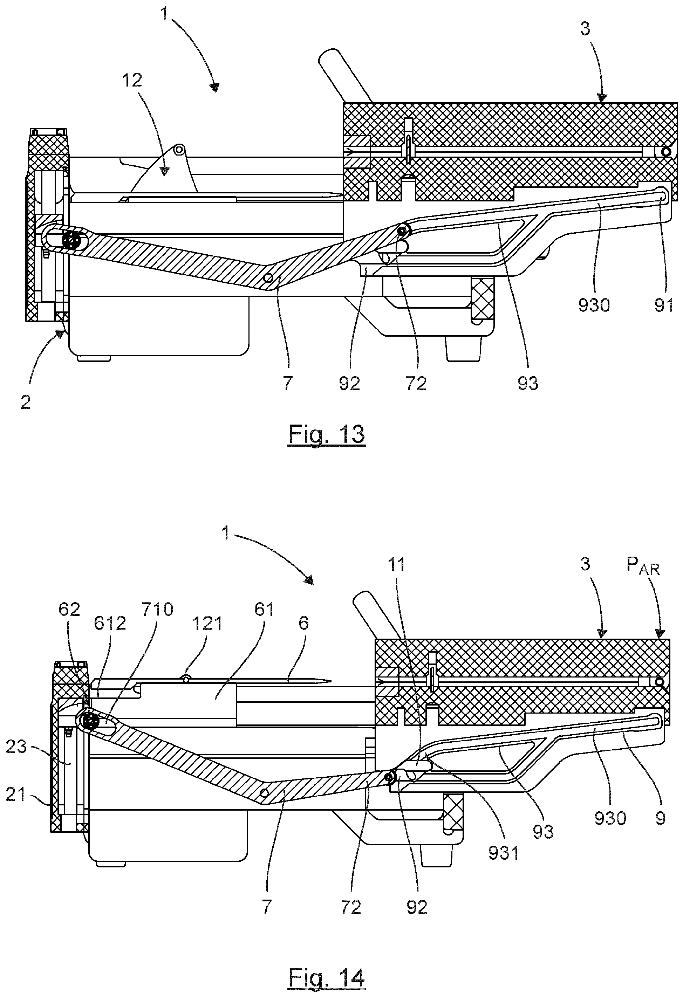

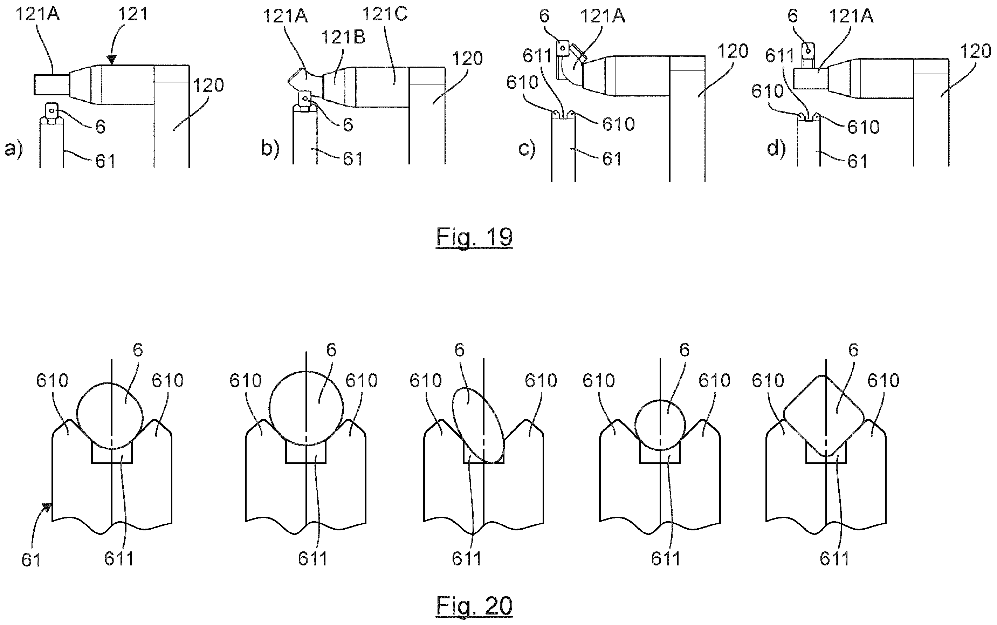

Les lames d'extraction 61 présentent chacune une face supérieure présentant un profil particulier et comprenant une gorge 611 destinée à réceptionner et maintenir une pique 6 présente dans le réservoir 10 ([Fig.14], vue d). Une telle gorge 611 permet de minimiser le risque que la pique 6 extraite ne retombe dans le réservoir 10 lors de la manipulation du dispositif 1 par l'opérateur. Ce profil particulier permet aux lames d'extraction 61 de recevoir des piques avec des sections différentes comme cela est expliqué en relation avec les figures 20 à 26, et permet également d'éviter la sélection de deux piques par une seule lame d'extraction, ce qui pourrait endommager la machine lors de la phase d'embrochage.

Dans l'exemple illustré, le premier galet 62 est solidaire d'un élément de support faisant perpendiculairement saillie à partir de la traverse 60 et étant orienté selon l'axe longitudinal du dispositif 1. Le premier galet 62 est agencé sensiblement au milieu de la traverse 60. Une rainure 66 est en outre ménagée dans la traverse 60, en regard du premier galet 62, de manière à permettre le passage des moyens de synchronisation, à savoir la première extrémité du levier de synchronisation comme illustré en relation avec les figures 13 à 16 notamment.

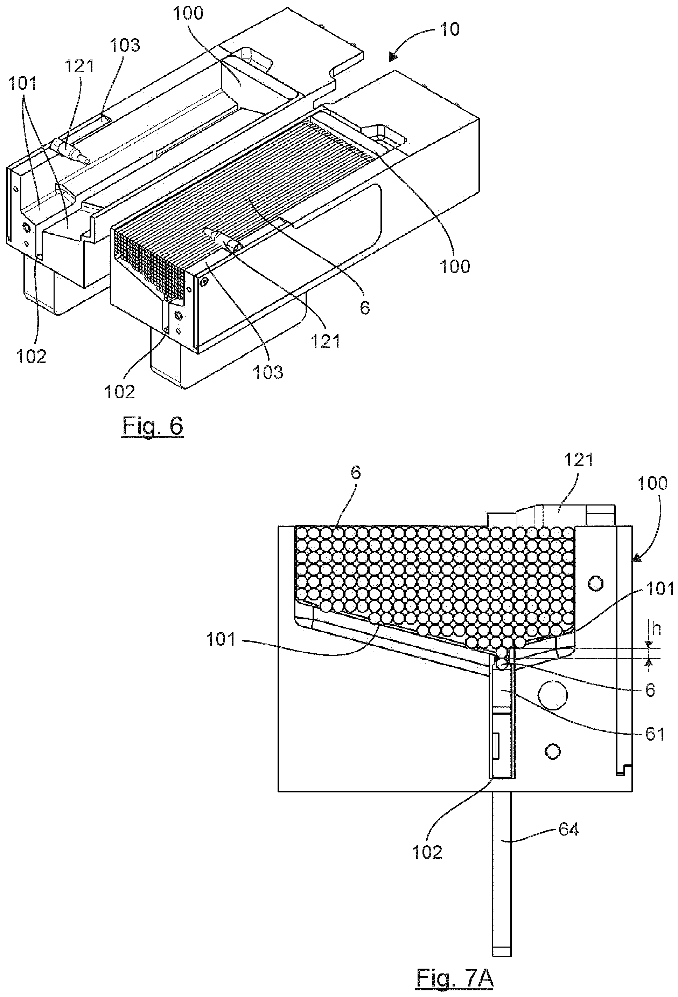

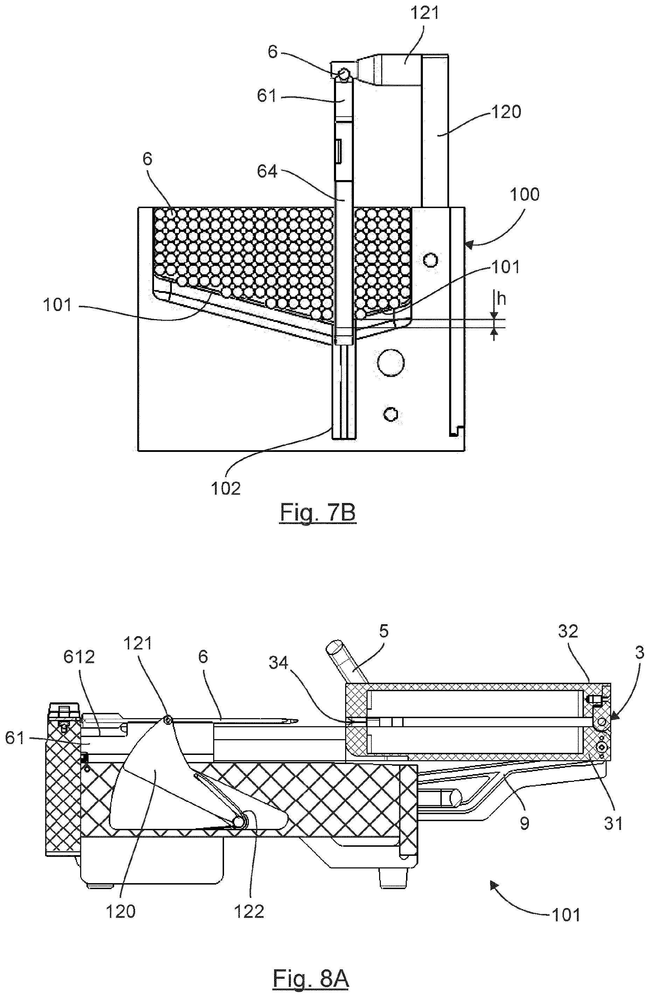

Par ailleurs, chaque lame d'extraction 61 est prolongée par une portion inférieure 64, formée par une plaque, configurée pour empêcher les piques présentes dans le réservoir 10 de s'introduire accidentellement à l'intérieur d'une fente 102 de réception de la lame d'extraction 61, tel qu'illustré en relation avec les figures 6, 7A et 7B notamment.

La [Fig.17] montre deux piques 6 disposées chacune sur une lame d'extraction 61 en position haute, un doigt 121 de maintien retenant chaque pique 6 dans la gorge de chaque lame d'extraction 61. Dans cet exemple de réalisation, l'extrémité avant de chaque lame d'extraction 61 présente une encoche 612 rectangulaire de réception de la tête de la pique 6 en forme de drapeau, comme visible sur la lame d'extraction 61 située à droite (la tête en drapeau de la pique 6 située à gauche est engagée dans la butée 41 adaptée pour recevoir la tête de piques dites drapeaux notamment). Les lames d'extraction peuvent ne pas présenter cette encoche 612 lorsque le dispositif est configuré pour l'embrochage de denrées sur des piques rectilignes.

La [Fig.19] présente sur les vues c) et d) un profil particulier de la partie supérieure d'une lame d'extraction 61. Cette partie supérieure présente une gorge 611 de réception dont le fond est une rainure de section rectangulaire bordée de part et d'autre d'un rebord incliné et évasé, chaque rebord étant défini par une arête latérale dont la base est de section rectangulaire et le sommet est triangulaire. Cette géométrie particulière de la gorge 611 permet de maintenir différents types de piques 6 dans la gorge 611 de réception de la lame d'extraction 61.

Cette compatibilité de la gorge 611 avec différents types de piques 6 est illustrée sur la [Fig.20]. Les différentes vues de cette [Fig.20] montrent plusieurs types de piques avec des sections différentes (circulaire, ovale, rectangulaire avec des bords arrondis,...) qui viennent se positionner de différentes manières dans la gorge 611 et sont retenues de façon fiable dans cette dernière.

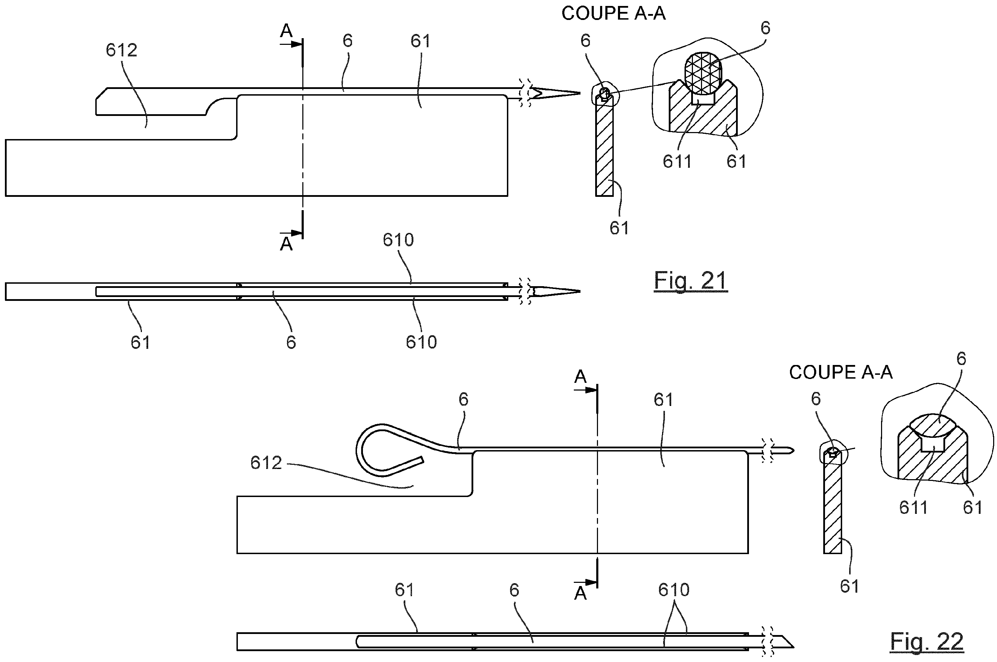

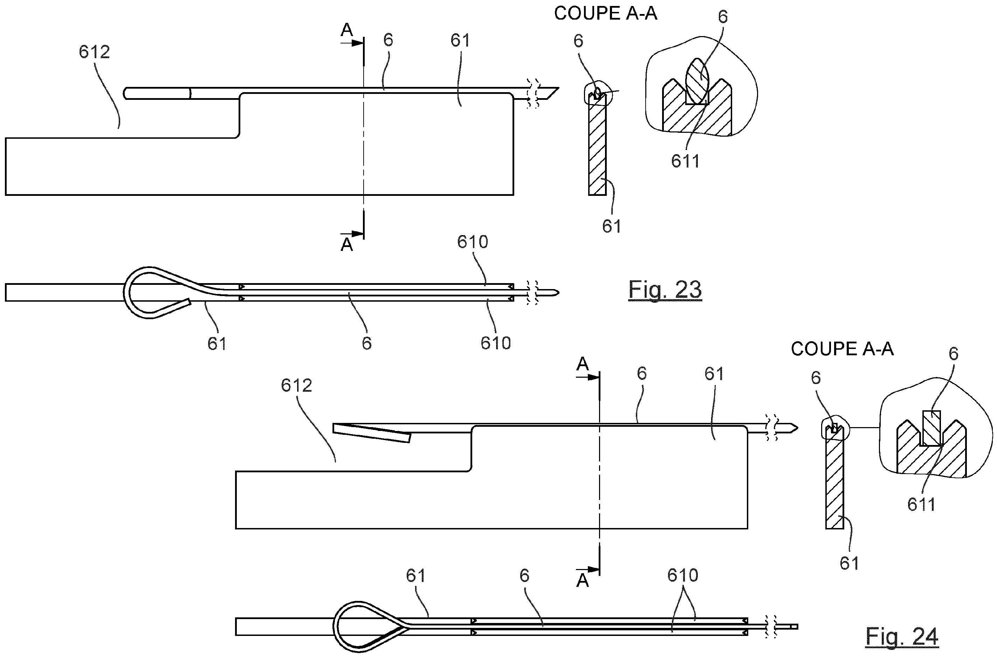

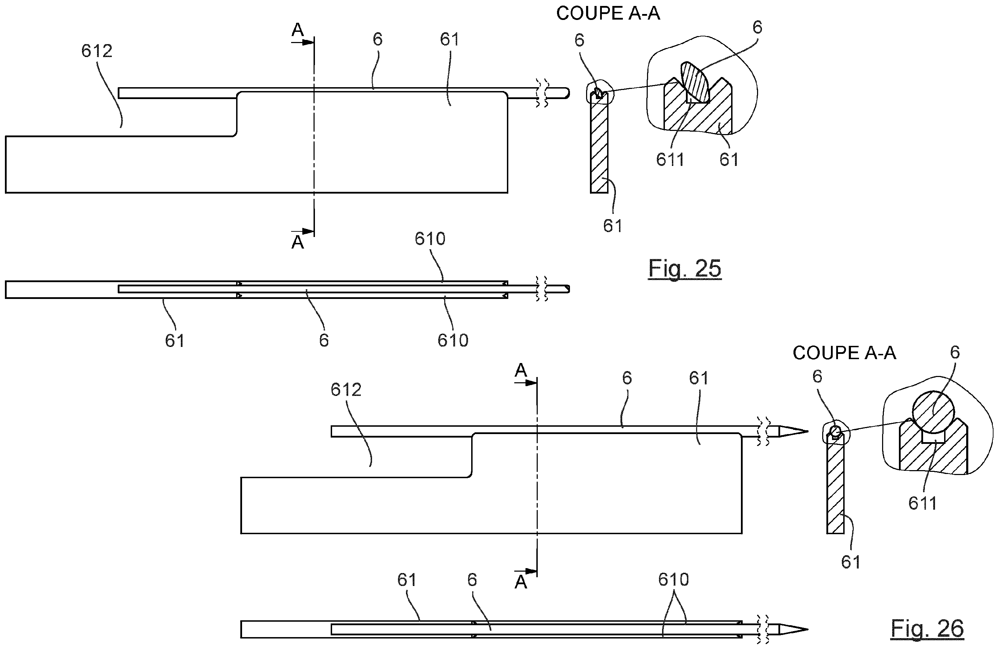

Les figures 21 à 26 montrent chacune la mise en place d'un type particulier de pique 6 dans la gorge 611 d'une lame d'extraction 61 du dispositif de l'invention, à savoir : pique drapeau sur la [Fig.21], pique avec embout en boucle et de section ovale selon deux orientations différentes sur les figures 22 et 23, pique avec embout en boucle et de section rectangulaire sur la [Fig.24], pique rectiligne avec section en losange sur la [Fig.25], pique rectiligne avec section ronde sur la [Fig.26]. Chaque figure comporte une vue de côté, une vue de dessus, et une vue en coupe transversale A-A avec un médaillon montrant de façon détaillée la retenue de la pique 6 dans la gorge 611.

### Moyens de synchronisation de l'extracteur mobile

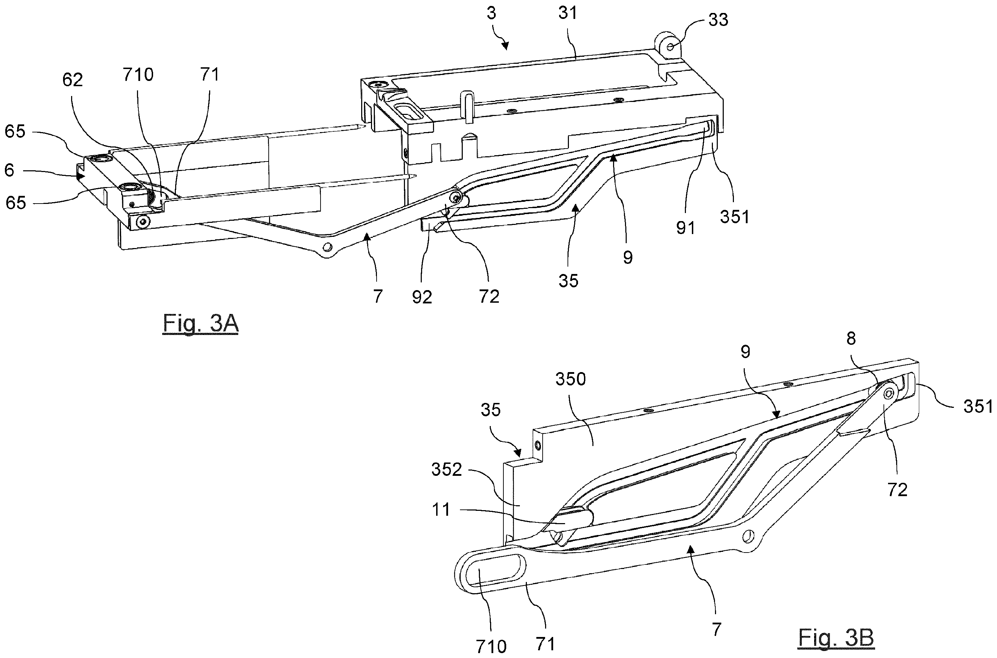

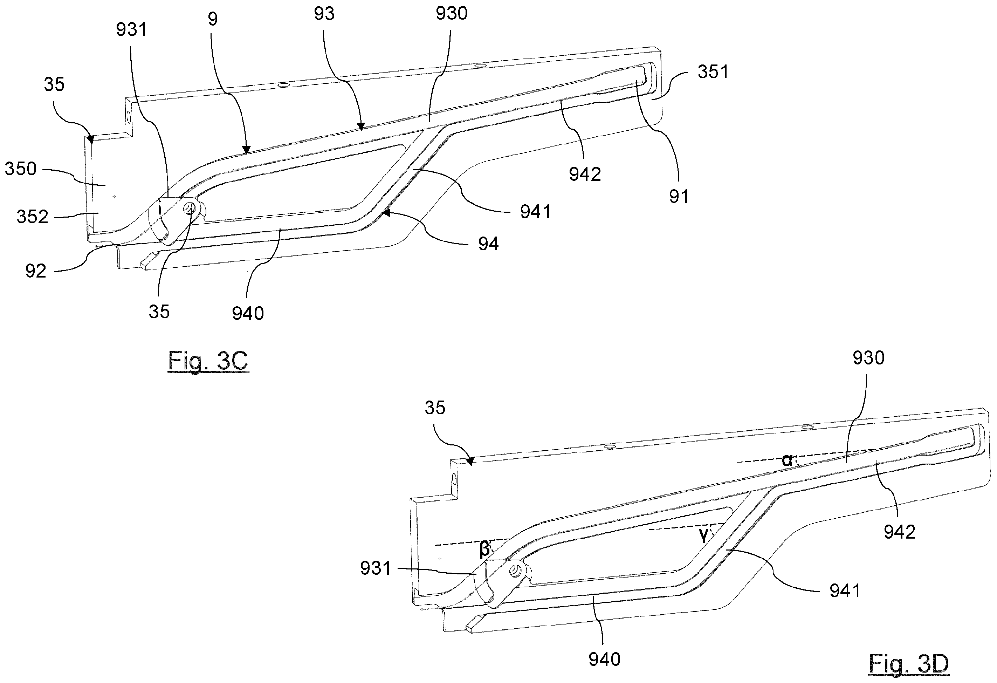

Les figures 3A à 3D sont différentes vues d'un exemple de moyens de synchronisation du déplacement de l'extracteur mobile de piques avec le déplacement du chariot mobile dans un dispositif de fabrication de brochettes conforme à l'invention.

Dans le cas où le réservoir de piques non utilisées est disposé sous le chariot mobile 3, conformément à l'exemple illustré, les moyens de synchronisation sont configurés pour lier le coulissement vertical de l'extracteur mobile de piques au coulissement horizontal du chariot mobile 3.

Plus précisément, les moyens de synchronisation sont configurés pour synchroniser la montée de l'extracteur mobile de piques 6 de la position basse vers la position haute au déplacement du chariot mobile 3 de la position avant vers la position arrière, correspondant à un recul du chariot mobile 3, et la descente de l'extracteur mobile de piques 6 de la position haute vers la position basse au déplacement du chariot mobile 3 de la position arrière vers la position avant, correspondant à un avancement du chariot mobile 3.

Dans l'exemple illustré, un tel couplage des déplacements du chariot mobile 3 et de l'extracteur mobile de piques 6 est obtenu par la mise en œuvre de moyens de synchronisation comprenant un levier de synchronisation 7, un deuxième galet 8 porté par le levier de synchronisation 7, une piste de synchronisation 9 ménagée sur le chariot mobile 3 dans laquelle le deuxième galet 8 est mobile en coulissement et un premier galet 62 de l'extracteur mobile de piques 6 coopérant avec le levier de synchronisation 7.

Tel qu'illustré, le levier de synchronisation 7 présente sensiblement une forme en « L » et est monté pivotant, en son coude, sur le bâti (non représenté).

Le levier de synchronisation 7 présente une première extrémité longitudinale 71, appelée première extrémité, et une deuxième extrémité longitudinale 72, appelée deuxième extrémité, située à l'opposé de la première extrémité 71.

La première extrémité 71 présente une lumière oblongue 710 configurée pour recevoir le premier galet 62 porté par l'extracteur mobile de piques 6. Le premier galet 62 est configurée pour être mobile à l'intérieur de la lumière oblongue 710 lors du fonctionnement du dispositif. Plus précisément, et comme décrit et illustré plus en détail par la suite, la lumière oblongue 710 permet le déplacement vertical du premier galet 62 lors du pivotement du levier de synchronisation 7.

La deuxième extrémité 72 du levier de synchronisation 7 porte le deuxième galet 8, partiellement visible en [Fig.3B], configuré pour se déplacer à l'intérieur de la piste de synchronisation 9 ménagée sur le chariot mobile 3.

Plus précisément, la piste de synchronisation 9 est ménagée sur une face latérale 350 d'une plaque 35 fixée sous le plateau inférieur 31. La plaque 35 est orientée selon l'axe longitudinal du dispositif 1 de manière à présenter une première extrémité longitudinale 351 située à l'arrière du chariot mobile 3 et une deuxième extrémité longitudinale 352 située à l'avant du chariot mobile 3.

Tel qu'illustré, la piste de synchronisation 9 présente une première extrémité 91 associée à la position basse de l'extracteur mobile de piques 6, et une deuxième extrémité 92 associée à la position haute de l'extracteur mobile de piques 6.

La première extrémité 91 de la piste de synchronisation 9 est située à la première extrémité longitudinale 351 de la plaque 35 au voisinage du plateau inférieur 31. En d'autres termes, la première extrémité 91 de la piste de synchronisation 9 est située dans la partie supérieure arrière de la plaque 35.

La deuxième extrémité 92 de la piste de synchronisation 9 est située à la deuxième extrémité longitudinale 352 de la plaque 35, à distance du plateau inférieur 31. En d'autres termes, la deuxième extrémité 92 de la piste de synchronisation 9, qui est diagonalement opposée à la première extrémité 91, est située dans la partie inférieure de deuxième extrémité longitudinale 352 de la plaque 35.

La piste de synchronisation 9 présente en outre un premier chemin 93, configuré pour être emprunté par le deuxième galet 8 lors du recul du chariot mobile 3, et un deuxième chemin 94, configuré pour être empruntée par ce même deuxième galet 8 lors de l'avancement du chariot mobile 3. Ces chemins s'étendent tous deux entre les première et deuxième extrémités 91, 92.

Tel qu'illustré en relation avec la [Fig.3D], le premier chemin 93 comprend un premier segment 930 partant de la première extrémité 91 et prolongé par un deuxième segment 931 débouchant dans la deuxième extrémité 92. Le deuxième galet 8 lorsqu'il circule dans ce premier chemin décrit ainsi une trajectoire descendante.

Le premier segment 930 est configuré pour initier une montée lente de l'extracteur mobile de piques tant que le chariot mobile est positionné au-dessus des lames d'extraction et des piques portées par celles-ci. Le deuxième segment 931 est configuré pour permettre la montée rapide de l'extracteur mobile de piques dès lors que le chariot mobile est suffisamment éloigné des lames d'extraction et des piques portées par celles-ci.

Pour ce faire, le premier segment 930 présente, par rapport à l'axe longitudinal du dispositif, c'est-à-dire par rapport à un axe horizontal, une première pente d'angle α et le deuxième segment 931 présente une deuxième pente d'angle β. La valeur de l'angle β est supérieure à la valeur de l'angle α.

Le deuxième chemin 94 quant à lui comprend un premier segment 940 partant de la deuxième extrémité 92 et prolongé par un deuxième segment 941, lui-même prolongé par un troisième segment 942 débouchant dans la première extrémité 91. Le deuxième galet 8 décrit ainsi une trajectoire montante lorsqu'il circule dans ce deuxième chemin.

Lorsque l'opérateur tire le chariot vers lui, le premier segment 940 est configuré pour maintenir l'extracteur mobile de piques en position haute jusqu'à ce que les piques portées par les lames d'extraction pénètrent dans les orifices de passage débouchant dans les cavités du chariot mobile. Le deuxième segment 941 est configuré pour initier une descente rapide de l'extracteur mobile de piques pour éviter que le chariot mobile percute les lames d'extraction lorsqu'il se rapproche de l'opérateur. Le troisième segment 942 est configuré pour poursuivre la descente lente de l'extracteur mobile de piques jusqu'en position basse de manière à préparer l'extraction des piques du prochain cycle de fonctionnement du dispositif.

Pour ce faire, le premier segment 940 présente, par rapport à l'axe longitudinal du dispositif, une pente d'angle nul, le deuxième segment 941 présente une pente d'angle γ et le troisième segment 942 présente une pente d'angle α. En outre, le premier segment 940 du deuxième chemin 94 présente une longueur inférieure au premier segment 930 du premier chemin 93 et la valeur de l'angle γ du deuxième segment 941 du deuxième chemin 94 est sensiblement supérieure à la valeur de l'angle β du deuxième segment 931 du premier chemin 93.

L'angle β est déterminé de manière à assurer une descente rapide des lames d'extraction 61 pour pallier leur immobilité lors du coulissent du galet 8 dans le premier segment 940 du deuxième chemin 94. En d'autres termes, l'angle β est déterminé pour éviter que les lames d'extraction 61 ne percutent le chariot mobile 3. De telle contraintes font que le deuxième segment 941 du deuxième chemin 94 débouche dans le premier segment 930 du premier chemin 93 et donc que le troisième segment 942 du deuxième chemin 94 est confondu avec une portion du premier segment 930 du premier chemin 93.

La fonction respective de chaque segment de la piste de synchronisation explique donc la raison pour laquelle les premier et deuxième chemins présentent des agencements et courbures différent(e)s.

### Volet d'obturation unidirectionnel

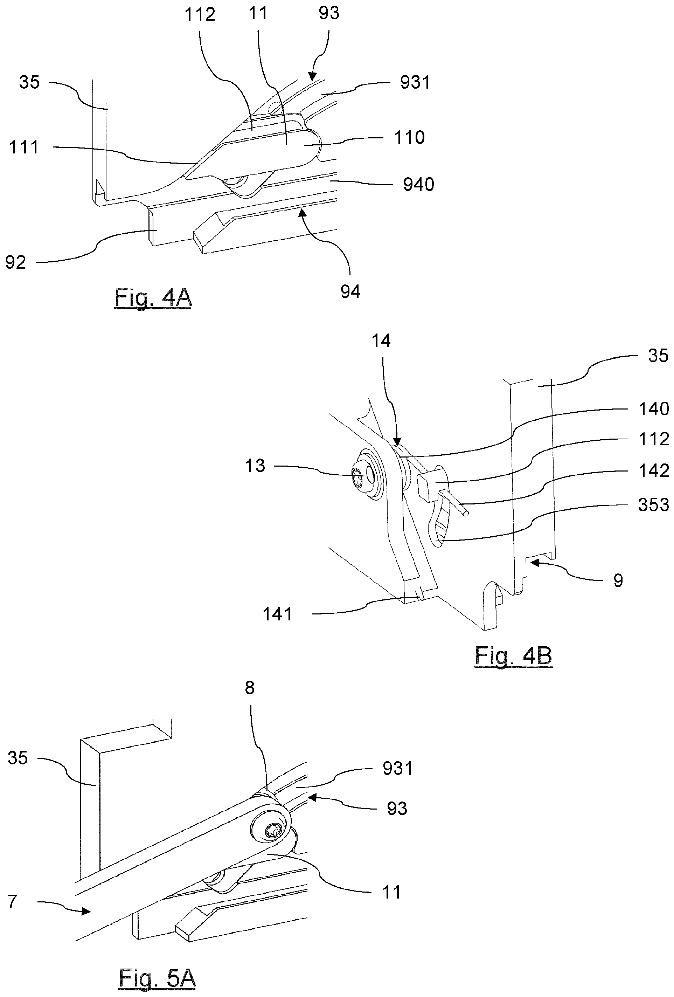

On présente en relation avec les figures 4A à 5D un exemple de structure de volet d'obturation unidirectionnel disposé à l'intérieur de la piste de synchronisation du dispositif de fabrication de brochettes.

Les figures 4A et 4B présentent selon différentes vues en perspective, et de manière focalisée, la structure d'un volet d'obturation unidirectionnel. Les figures 5A à 5D illustrent le mouvement du volet d'obturation unidirectionnel lors du déplacement du deuxième galet dans la piste de synchronisation.

Le volet d'obturation unidirectionnel 11, également appelé clapet, est configuré, d'une part, pour autoriser le déplacement du deuxième galet 8 à l'intérieur du premier chemin 93 de la piste de synchronisation lors du recul du chariot mobile 3 et pour guider le deuxième galet 8 vers la deuxième extrémité de la piste de synchronisation 9. Le volet d'obturation unidirectionnel 11 est configuré, d'autre part, pour empêcher le déplacement du deuxième galet 8 à l'intérieur de ce même premier chemin 93 lors de l'avancement du chariot mobile 3 et pour guider le deuxième galet 8 vers le deuxième chemin 94.

Tel qu'illustré, le volet d'obturation unidirectionnel 11 est situé entre et à l'intersection du deuxième segment 931 du premier chemin 93 et du premier segment 940 du deuxième chemin 94. Il est agencé de manière à séparer les deux chemins 93, 94.

Le volet d'obturation unidirectionnel 11 présente, à une première extrémité 110, un arbre de rotation (non visible) disposé dans un orifice (non visible) de la plaque 35 et solidarisé à cette dernière par le biais d'une vis 13 pour permettre le pivotement du volet d'obturation unidirectionnel 11, tel qu'illustré en relation avec la [Fig.4B].

Un ressort 14 est solidarisé, d'une part, au volet d'obturation unidirectionnel 11 et, d'autre part, à la plaque 35. Le ressort 14 est configuré pour ramener et maintenir le volet d'obturation unidirectionnel 11 au travers du premier chemin 93 en l'absence d'une pression exercée par le deuxième galet 8 sur le volet 11. Dans l'exemple illustré, les spires 140 du ressort 14 sont portées par l'arbre de rotation du volet d'obturation unidirectionnel 11 et les deux extrémités rectilignes 141, 142 du ressort 13, également appelées brins, sont couplées à la plaque 35 et au volet d'obturation unidirectionnel 11. Plus précisément, le volet d'obturation unidirectionnel 11 présente un ergot 112 faisant saillie parallèlement à l'arbre de rotation, disposé dans un orifice 353 de la plaque 35 pour retenir l'extrémité 142 du ressort 14.

Le volet d'obturation unidirectionnel 11 présente en outre une deuxième extrémité 111, opposée à la première extrémité 110, une face supérieure 113, disposée en regard du premier chemin 93, et une face inférieure (non visible), disposée en regard du deuxième chemin 94.

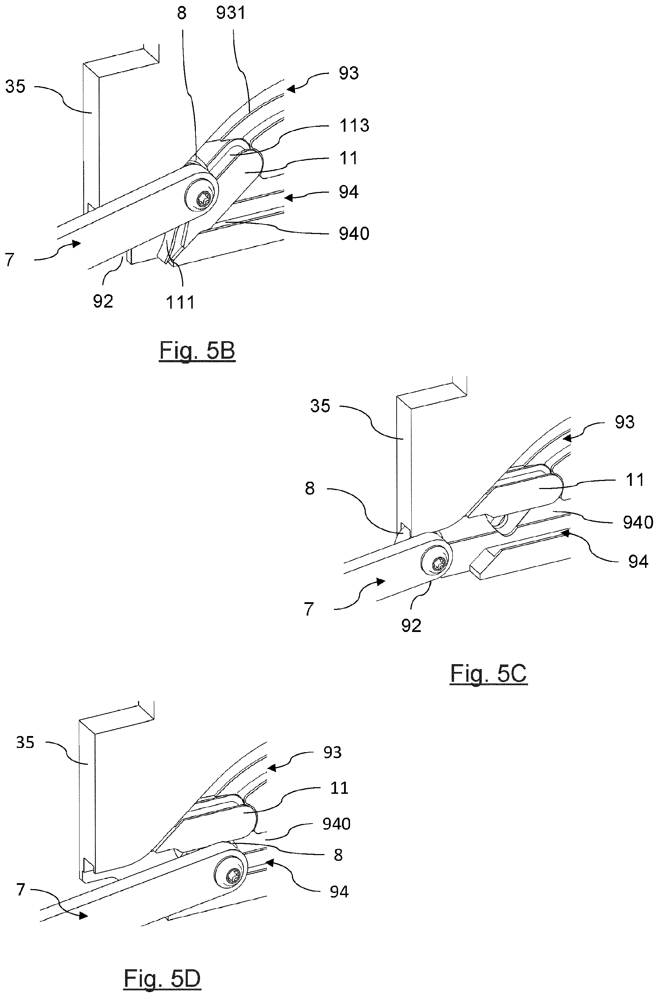

Lors du déplacement du deuxième galet 8 dans le deuxième segment 931 du premier chemin 93, tel qu'illustré en relation avec les figures 5A et 5B, le deuxième galet 8 fait progressivement pression sur la face supérieure 113 du volet d'obturation unidirectionnel 11, entraînant le pivotement de celui-ci et la compression du ressort 14, jusqu'à venir plaquer la deuxième extrémité 111 du volet d'obturation unidirectionnel 11 contre la paroi du premier segment 940 du deuxième chemin 94. Ainsi, la face supérieure 113 prolonge localement un bord du deuxième segment 931 du premier chemin 93 guidant ainsi le deuxième galet 8 vers la deuxième extrémité 92 de la piste de synchronisation 9.

Lorsque le deuxième galet 8 rejoint la deuxième extrémité 92 de la piste de synchronisation 9, tel qu'illustré en relation avec la [Fig.5C], le ressort 14, qui n'est plus comprimé, ramène le volet d'obturation unidirectionnel 11 au travers du premier chemin 93 pour l'obstruer. Dans une telle position, la face inférieure du volet d'obturation unidirectionnel 11 prolonge localement un bord du premier segment 940 du deuxième chemin 94 incitant le deuxième galet 8 à emprunter le deuxième chemin 94, tel qu'illustré en relation avec la [Fig.5D].

### Réservoir de piques

On présente en relation avec les figures 6, 7A, 7B, 9A et 9B un exemple de structure de réservoir à piques du dispositif de fabrication de brochettes, décrit ci- avant.

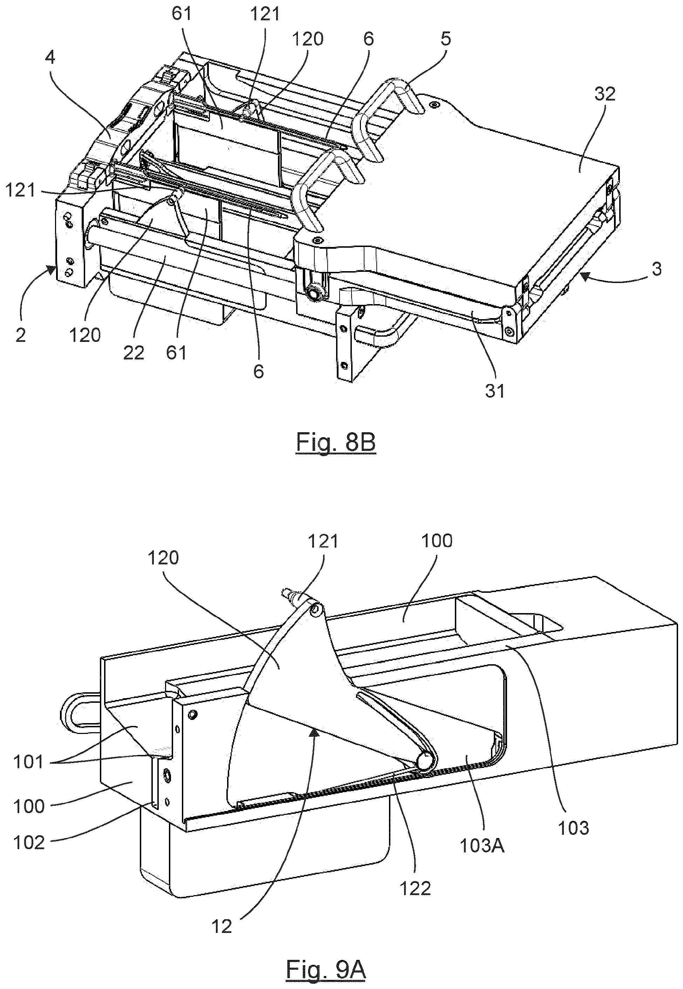

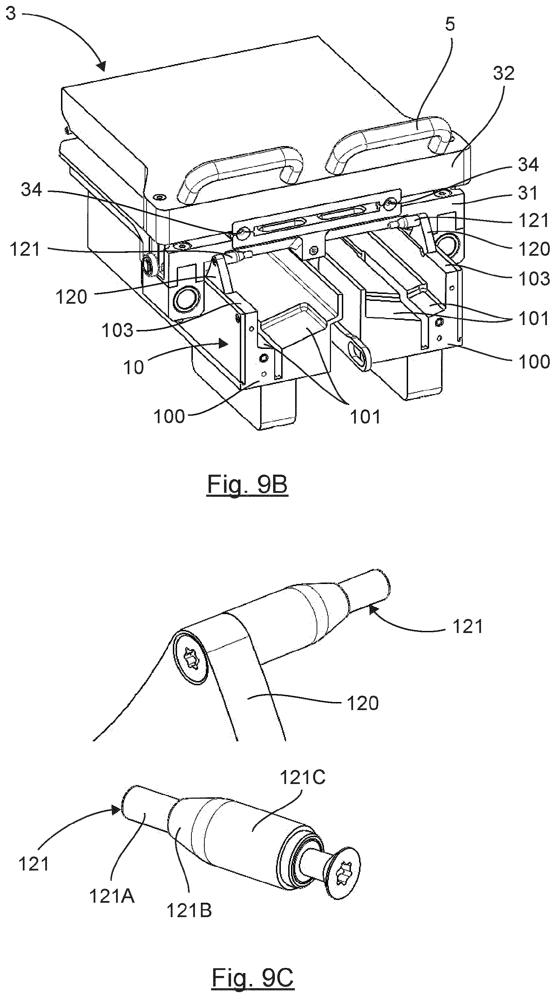

La [Fig.6] présente en perspective, et de manière isolée, un exemple de réservoir 10 stockant un lot de piques 6 non utilisés. Les figures 7A et 7B sont des coupes transversales d'une lame d'extraction, en position basse et en position haute respectivement, coopérant avec le réservoir 10. La [Fig.9A] montre partiellement le réservoir et la [Fig.9B] est une vue partielle du dispositif et du réservoir.

Tel qu'illustré, le réservoir 10 est divisé en deux compartiments 100 sensiblement symétriques s'étendant longitudinalement. Chaque compartiment 100 comprend un fond 101 présentant deux surfaces inclinées convergeant dans la partie la plus basse du compartiment 100 vers une fente 102, de forme parallélépipédique rectangle, ménagée verticalement. Une telle inclinaison permet d'orienter les piques 6 vers les lames d'extraction 61 lorsque les lames sont disposées dans les fentes 102.

Les extrémités basses des deux surfaces inclinées sont décalées d'une hauteur « h ». Il a en effet été observé par les inventeurs que les piques drapeaux, une fois dans le réservoir, étaient soumis à un brassage plus favorable grâce au différentiel de pente qui garantit une mise en position d'un pique dans la lame en position basse.

En d'autres termes, cette configuration particulière permet garantir la sélection d'une pique au fond du réservoir, notamment pour les piques avec tête.

Chaque fente 102 est configurée pour recevoir, d'une part, une lame d'extraction 61 qui lors de sa montée au sein du réservoir 10 assure le prélèvement et l'extraction d'une pique 6 hors du réservoir 10 et, d'autre part, une portion inférieure 64 prolongeant la lame d'extraction 61. Cette portion inférieure 64 est destinée à empêcher les piques 6 de s'introduire dans la fente 102 lorsque la lame d'extraction 61 s'en dégage ([Fig.7B]).

La [Fig.7A] montre la lame d'extraction 61 en position basse. Dans une telle position, chaque lame d'extraction 61 est, de préférence, entièrement logée dans la fente 102 associée de manière à assurer le positionnement d'une pique 6 dans la gorge 611 de réception dédiée de la lame.

La [Fig.7B] montre la lame d'extraction 61 en position haute. Dans une telle position, la lame d'extraction 61 assure le positionnement de la pique 6 située dans la gorge 611 en regard d'un orifice 34 de passage d'une pique, dit orifice d'embrochage, du chariot mobile 3 en vue de l'opération d'embrochage. Malgré le fait que la lame d'extraction 61 est disposée hors de la fente 102, la portion inférieure 64 reste partiellement disposée à l'intérieur de la fente 102.

Bien que cela ne soit pas illustré, on comprend que la portion inférieure 64 de la lame d'extraction 61 reste partiellement disposée à l'intérieur de la fente 102 durant tout le déplacement de la lame d'extraction 61 depuis la position basse vers la position haute, et inversement.

Un tel agencement permet d'éviter que les piques 6 non utilisées présentes dans le réservoir 10 ne s'échappent de celui-ci par les fentes 102, sous l'effet de la gravité, ou que des piques 6 non utilisées bloquent la descente de la lame d'extraction 61 au sein du réservoir 10.

### Doigts de maintien des piques

Les figures 6, 7B, 8A, 8B, 9A, 9B et 9C notamment présentent, selon différentes vues, un exemple de moyens de maintien 12 d'une pique sur une lame d'extraction correspondante. Dans l'exemple illustré sur ces figures, les moyens de maintien 12 comprennent deux leviers 120 montés chacun pivotant dans une paroi latérale 103 du réservoir 10 à piques, et plus précisément dans la paroi externe de chaque compartiment 100 du réservoir. Chaque levier 120, de forme globalement triangulaire dans cet exemple (mais pouvant prendre une autre forme), est mobile entre une position escamotée où il est disposé au sein d'une des parois latérales 103 du réservoir 10 et une position déployée où il s'étend en partie en dehors d'une des parois latérales 103 du réservoir 10 ([Fig.9A] et 9B notamment). Un ressort 122 est monté autour de l'axe de pivotement du levier 120 de sorte à pousser le levier 12 vers sa position déployée (c'est-à-dire vers le haut) lorsqu'aucune contrainte n'est exercée sur le levier 120 par le plateau inférieur du chariot mobile. Un doigt de maintien 121 situé à l'extrémité supérieure du levier 120 s'étend perpendiculairement à la surface plane du levier 120 en direction du réservoir 10 à piques.

En d'autres termes, un levier 120 est monté dans chacune des deux parois latérales 103 du réservoir 10, chaque doigt de maintien 121 du levier 120 étant destiné, en position déployée, à coopérer avec une des deux lames d'extraction 61 associées chacune à un compartiment 100 du réservoir 10. En position escamotée du levier 120, le doigt de maintien 121 correspondant ne coopère pas avec une pique 6.

En position déployée ([Fig.7B] notamment), les deux doigts de maintien 121 sont chacun aptes à maintenir une pique en regard d'un des deux orifices 34 d'embrochage (figures 8A et 8B) lorsque le chariot mobile 3 atteint la position arrière, et donc lorsque la lame d'extraction 61 portant une pique 6 arrive en position haute, afin d'éviter qu'une utilisation brusque du dispositif 1 éjecte la pique 6 hors de la gorge 611 de la lame d'extraction 61.

Lors de la montée de l'extracteur mobile de piques 6, la pique 6 portée par chaque lame d'extraction 61 entre en contact avec le doigt de maintien 121 correspondant (qui forme un doigt d'arrêt de fin de course) et vient se placer sous celui-ci. Ainsi, lorsque la lame d'extraction 61 d'une pique 6 est en position haute, tel qu'illustré sur la [Fig.8B], le doigt de maintien 121 ou d'arrêt est en contact avec la pique 6 et plaque la pique 6 dans la gorge 611 de la lame d'extraction 61.

Chaque doigt de maintien 121 est ainsi monté sur un levier 120 mobile et se positionne au-dessus de la pique 6 correspondante de sorte à maintenir la pique 6 dans la gorge 611 de réception et de maintien de chaque lame d'extraction 61 en position haute de l'extracteur mobile de piques.

Les parois latérales 103 du réservoir 10 présentent un logement interne 103A dimensionné pour loger le levier 120 qui est monté sur un axe de rotation.

Un ressort 122, disposé dans le logement interne 103A autour de cet axe de rotation, permet de garder le levier 120 et donc le doigt de maintien 121 en position haute suivant la position du chariot mobile 3. La paroi latérale 103 est configurée pour empêcher la rotation du levier 120 au-delà de sa position haute.Le but de ce mécanisme de maintien de pique(s) est d'actionner un sous-ensemble suivant la position du plateau inférieur 31 de telle sorte que le doigt de maintien 121 atteigne sa position haute avant que le pique 6 sélectionné par une lame d'extraction 61 n'arrive en position haute. L'abaissement et le soulèvement du levier 120 sont liés aux mouvements du chariot mobile 3comme on le verra par la suite. Comme décrit précédemment, on rappelle que l'abaissement et le soulèvement de lame d'extraction 61 sont également liés aux mouvements du chariot mobile 3 par le biais de moyens de synchronisation.

La [Fig.9C] illustre un exemple de doigt de maintien 121 comprenant une première portion cylindrique 121A d'extrémité destinée à venir en contact avec une pique, prolongée par une deuxième portion conique 121B et une troisième portion cylindrique 121Cde couplage au levier 120. Cette troisième portion comprend sur sa face circulaire externe un logement de réception d'une vis de fixation réversible du doigt de maintien 121 sur le levier 120.

En variante, il peut être prévu une ou plusieurs pattes ou ergots de fixation par encliquetage du doigt de maintien 121 au levier 120.

Le montage du doigt 121 sur le levier 12 est simple, de même que son démontage.

La première portion cylindrique 121A du doigt de maintien 121 qui est destinée à venir en contact avec une pique en étant disposée au-dessus de celle-ci avant l'embrochage (figures 7B, 8B et 12 notamment) est suffisamment souple ou flexible pour se déformer et passer sous la pique 6 lors de l'embrochage des denrées sur la pique, comme on le verra par la suite en relation avec les différentes vues de la [Fig.19].

### Fonctionnement du dispositif de fabrication de brochettes

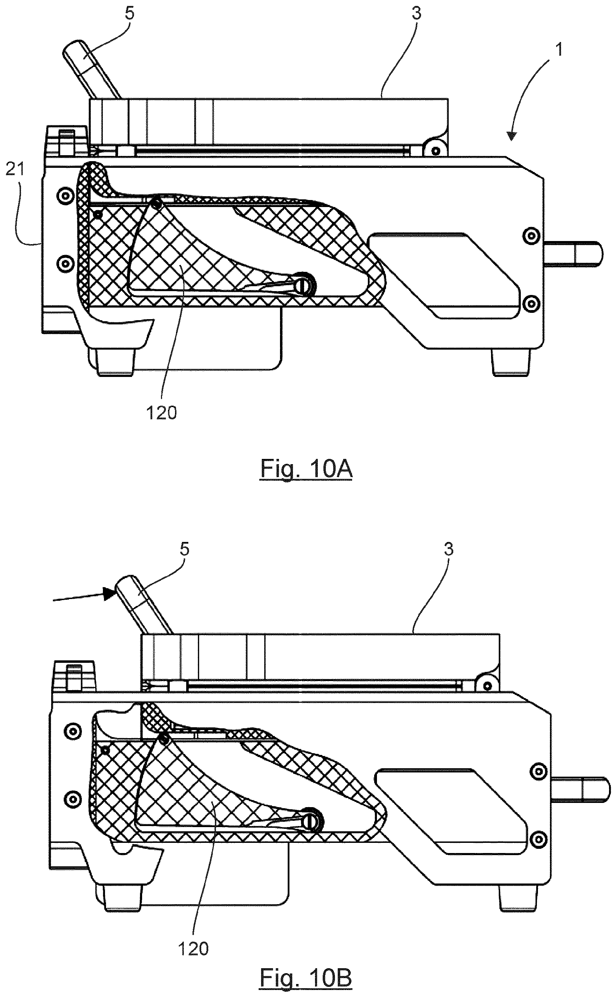

On décrit en relation avec les figures 10A à 10G, la première phase de sélection d'une pique 6 dans le réservoir 10 par une lame d'extraction 61, et de déploiement du levier 120 portant le doigt de maintien 121 d'une pique 6 prélevée dans le réservoir 10 par la lame d'extraction 61. Durant cette phase, il est prévu que le doigt de maintien 121 atteigne sa position haute avant que la pique 6 qui est sélectionné par une lame d'extraction 61 n'arrive en position haute.

Cette cinématique s'applique pour chaque lame d'extraction du dispositif 1, ce dernier pouvant mettre en œuvre plusieurs lames associées chacune à un doigt de maintien.

Sur la [Fig.10A], les plateaux 31, 32 du chariot mobile 3 sont en position avant.

L'utilisateur a déposé les produits alimentaires dans les évidements du plateau inférieur 31 du chariot mobile, puis le plateau supérieur 32 a été refermé sur le plateau inférieur 31. Si un cycle de fonctionnement du dispositif 1 de fabrication de brochettes a été mis en œuvre auparavant, l'opérateur retire préalablement du plateau inférieur 31 les brochettes fabriquées avant d'insérer des denrées alimentaires dans les évidements du plateau inférieur 31. Pour accéder aux évidements, l'opérateur manipule les poignées 5 du dispositif 1 pour pivoter le plateau supérieur 32 de sa position fermée à sa position ouverte P_{O}, dépose les denrées alimentaires sur les moules 311 du plateau inférieur 31 pour qu'elles soient centrées par rapport aux orifices 34, puis rabat le plateau supérieur 32 contre le plateau inférieur 31 pour revenir en position fermée P_{F}. Les denrées alimentaires disposées dans les cavités du chariot mobile 3, sont ainsi maintenues sans être écrasées par les moules 311 et contre moules 321 des plateaux inférieur 31 et supérieur 32 respectivement.

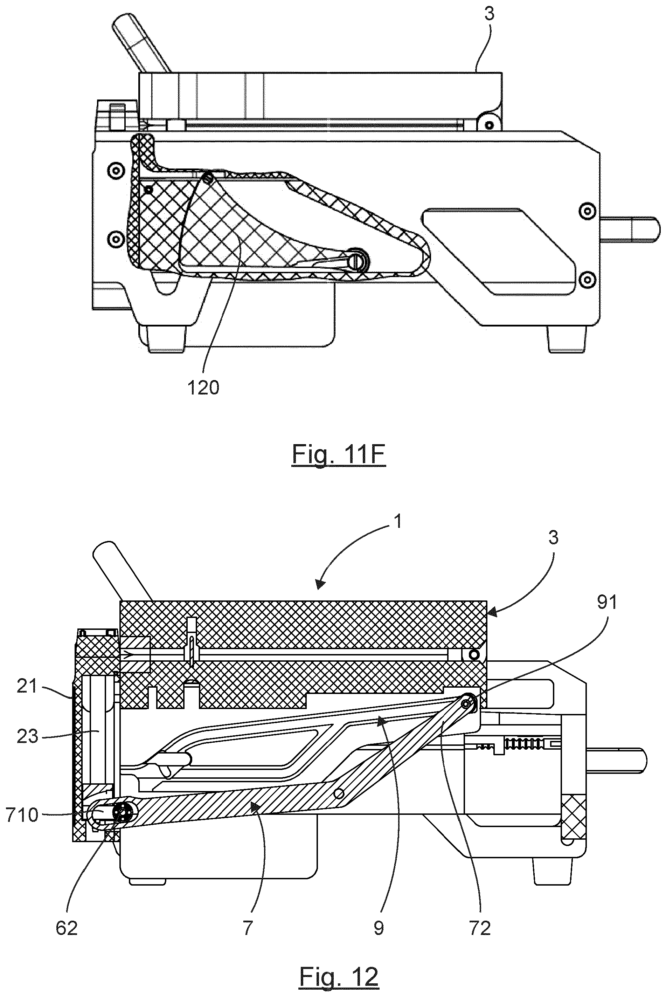

Dans cette position initiale, illustrée également sur la [Fig.12], le chariot mobile 3 est plaqué contre la paroi avant 21 du bâti 2 et est donc en position avant P_{AV}, proche de l'utilisateur, et le plateau supérieur 32 est rabattu sur le plateau inférieur 31. Dans une telle position, le levier 120 du doigt de maintien 121 est en position basse et est situé sous la plateau inférieur 31, l'extracteur mobile de piques 6 étant en position basse.

Dans une telle position, le premier galet 62 de l'extracteur mobile de piques 6 est situé à proximité de l'extrémité arrière de la lumière oblongue 710 ménagée sur la première extrémité 71 du levier de synchronisation 7, et le deuxième galet (non visible) porté par la deuxième extrémité 72 du levier de synchronisation 7 est positionné dans la première extrémité 91 de la piste de synchronisation 9.

Par ailleurs, les lames d'extraction 61 de l'extracteur mobile de piques 6 sont logées dans les fentes 102 des compartiments 100 du réservoir 10 afin qu'une pique puisse s'insérer dans la gorge 611 de chaque lame d'extraction 61 lors de la remontée de cette dernière.

Après cela, l'opérateur manipule les poignées 5 pour reculer (autrement dit pour pousser dans la direction indiquée par la flèche des figures 10B à 10F) le chariot mobile 3 afin de mettre en place des piques (deux piques dans cet exemple) en position d'embrochage. Lorsque l'utilisateur commence à pousser les plateaux 31, 32 vers l'arrière de la machine ([Fig.10B]), le levier 120 portant le doigt de maintien 121 reste en position basse ou escamotée. Il est configuré pour ne pas sortir tout de suite afin de ne pas interférer avec le plateau inférieur 31 qui reste au-dessus du levier 120 au début du déplacement du chariot mobile 3 vers l'arrière.

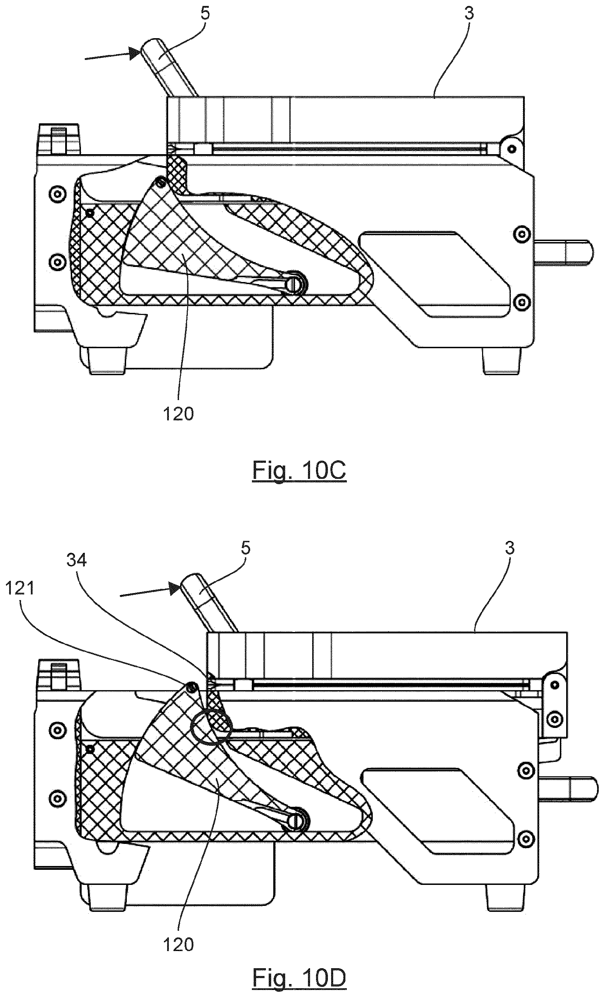

Une fois que les plateaux 31, 32 ont effectué une partie de la course vers l'arrière ( [Fig.10C]), le levier 120 commence à se déployer, c'est-à-dire à pivoter vers le haut à partir de sa position escamotée dans le sens horaire comme indiqué par la flèche. Ce levier 120 est en contact avec le dessous du plateau inférieur 31 formant butée et son extrémité portant le doigt de maintien 121 est en contact avec le rebord avant du plateau inférieur 31. Les lames d'extraction qui chacune portent et montent une pique ne sont pas encore visibles sur cette figure, car elles ne dépassent pas encore du haut du bac ou réservoir à piques.

Au cours de cette phase, illustrée en relation avec la [Fig.13], le recul du chariot mobile 3 le long des glissières 22 force le deuxième galet 8 à quitter la première extrémité 91 de la piste de synchronisation 9 pour emprunter le premier segment 930 du premier chemin 93. La pente du premier segment 930 étant faible, le déplacement du deuxième galet 8 provoque un pivotement lent du levier de synchronisation 7. La première extrémité 71 du levier de synchronisation 7 déplace donc le premier galet 62 pour faire coulisser lentement la traverse 60 le long des glissières 23. L'extracteur mobile de piques 6 quitte la position basse permettant aux lames d'extraction 61 de se déloger des fentes 102 des compartiments 100 du réservoir afin d'extraire des piques 6. La montée lente de l'extracteur mobile de piques permet d'éviter que les lames d'extraction 61 et les piques extraites ne heurtent le chariot mobile 3 situé au-dessus de celles-ci.

Sur la [Fig.10D], les plateaux 31, 32 sont en position intermédiaire. La rotation du levier 120 est quasiment terminée et son extrémité portant le doigt de maintien 121 n'est plus en contact avec le rebord avant du plateau inférieur 31. La butée du plateau inférieur 31 ne sera plus en contact avec le levier 120 par la suite.

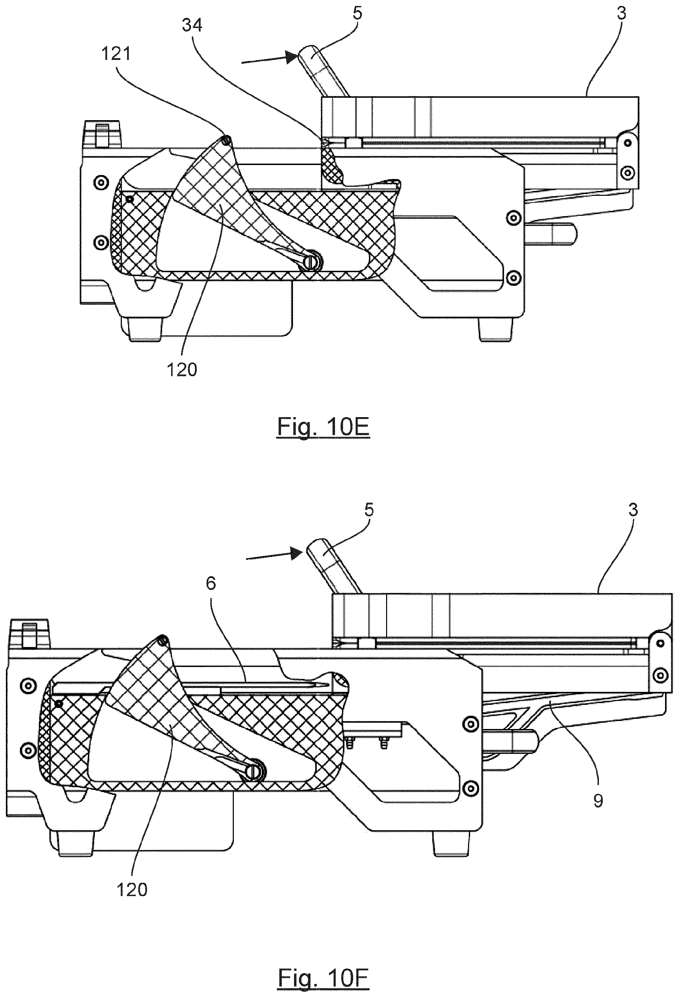

Les plateaux 31, 32 ont effectué une majeure partie de la course vers l'arrière sur la [Fig.10E]. Le levier 120 est en position haute ou déployée, et le doigt de maintien 121 est situé légèrement au-dessus de l'orifice 34, sa partie inférieure étant sensiblement situé au niveau de l'axe de l'orifice 34. Les lames d'extraction 61 portant chacune une pique ont encore une partie de leur déplacement à faire pour laisser le temps à un éventuel pique pris en double par une lame d'extraction de tomber dans le réservoir.

Au cours de cette deuxième phase de recul ([Fig.13]), les lames d'extraction 61 portant chacune une pique sont suffisamment éloignées du chariot mobile 3, le deuxième galet 8 emprunte le deuxième segment 931 du premier chemin 93 jusqu'à atteindre la deuxième extrémité 92 de la piste de synchronisation 9 en ayant préalablement franchi le volet d'obturation unidirectionnel 11, tel que décrit en relation avec les figures 5A à 5D. La pente du deuxième segment 931 étant plus importante que celle du premier segment 930, le déplacement du deuxième galet 8 provoque un pivotement rapide du levier de synchronisation 7 et donc une montée rapide de l'extracteur mobile de piques 6 et de ses lames d'extraction 61. La montée rapide des lames d'extraction 61 portant chacune une pique permet de pallier la montée lente de la première phase.

Les plateaux 31, 32 arrivent en bout de course sur la [Fig.10F]. Les lames d'extraction 61 portant chacune une pique dépassent tout juste du réservoir à piques. En fin de course sur la [Fig.10G], les lames d'extraction 61 amènent chacune leur pique 6 en contact avec le dessous du doigt de maintien 121 qui maintient la pique 6 dans la gorge de la lame d'extraction correspondante. Les doigts de maintien 121 empêchent les piques de tomber si le choc en fin de course du chariot mobile 3 est trop important. Il s'agit de la fonction principale du système de doigt de maintien.

Lorsque le chariot mobile 3 est en position arrière P_{AR}, telle qu'illustrée en relation avec la [Fig.14], le deuxième galet 8 est situé dans la deuxième extrémité 92 de la piste de synchronisation 9, le pivotement du levier de synchronisation 7 est terminé et l'extracteur mobile de piques 6 est plaqué contre la partie supérieur 211 de la portion avant 21 du bâti 2 de sorte à ce qu'il soit en position haute permettant ainsi aux piques 6 d'être en position d'embrochage.

Dans une telle position, le premier galet 62 de l'extracteur mobile de piques 6 est située à proximité de l'extrémité avant de la lumière oblongue 710 ménagée sur la première extrémité 71 du levier de synchronisation 7. Dans une telle position encore, les portions inférieures 64 des lames d'extraction 61 sont partiellement disposées dans les fentes 102 des compartiments 100 du réservoir 10 pour éviter que les piques ne s'introduisent dans les fentes 102. En outre, les doigts de maintien 121 maintiennent les piques pour éviter que les chocs survenant lors de l'arrivée du chariot en butée arrière ne déloge les piques des rainures ou gorges des lames d'extraction 61.

On décrit en relation avec les figures 11A à 11F, la deuxième phase d'embrochage des produits alimentaires sur chaque pique 6, une fois celles-ci en position haute, le chariot mobile 3 étant en position arrière (comme illustré en [Fig.10G]). Pour ce faire, le chariot mobile 3 est déplacé d'arrière en avant par l'opérateur dans la direction indiquée par les flèches des figures 11A à 11E. L'opérateur manipule les poignées 5 pour tirer ou déplacer vers l'avant, c'est-à-dire vers lui, le chariot mobile 3 afin de réaliser l'embrochage des denrées alimentaires disposées dans le chariot sur les piques 6, c'est-à-dire l'insertion des piques dans les aliments situés entre les plateaux supérieur 32 et inférieur 31 du chariot mobile 3.

Dans la position de départ de la [Fig.11A], les plateaux 31 , 32 du chariot mobile 3 sont repoussés en butée arrière (position finale de la phase précédente « sélection du pique ») et l'utilisateur tire les poignées 5 vers lui, c'est-à-dire vers l'avant.

Au début de la course de déplacement du chariot mobile 3, le doigt de maintien 121 ainsi que la lame d'extraction 61 de chaque pique restent en place le temps que la pique 6 soit guidé dans le chariot mobile 3 par le biais de l'orifice 34 d'embrochage correspondant.

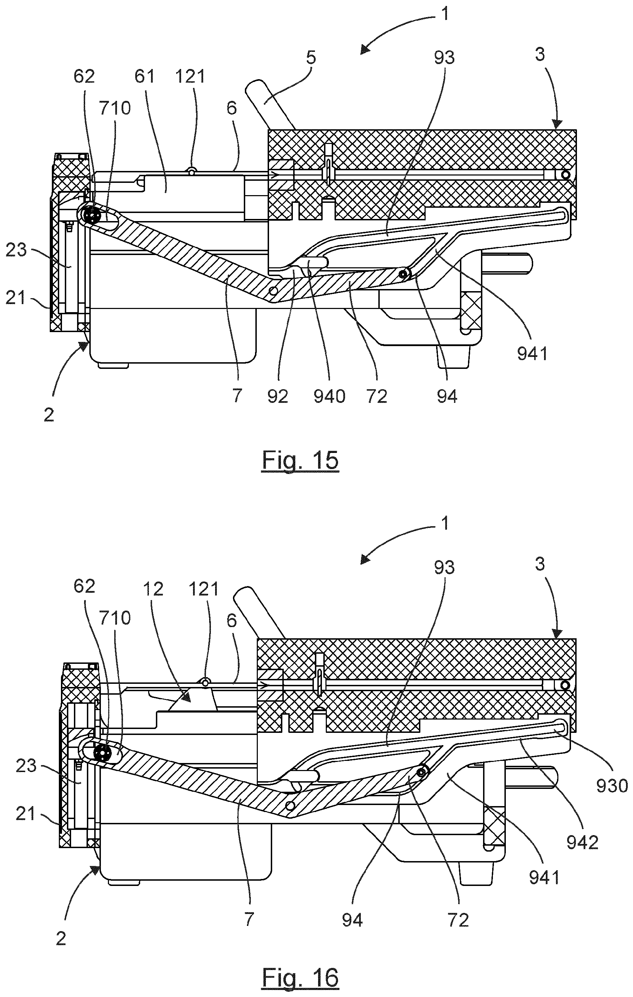

Au cours de cette première phase d'avancement, illustrée en relation avec la [Fig.15], l'avancement du chariot mobile 3 force le deuxième galet 8 à quitter la deuxième extrémité 92 de la piste de synchronisation 9 pour emprunter le premier segment 940 du deuxième chemin 94. Le volet d'obturation unidirectionnel 11 empêche le deuxième galet 8 d'emprunter le premier chemin 93, tel que décrit en relation avec les figures 5A à 5D. La pente du premier segment 940 du deuxième chemin 94 étant nulle, le déplacement du deuxième galet 8 dans cette portion n'engendre aucun pivotement du levier de synchronisation 7. L'extracteur mobile 61 de pique 6 reste donc en position haute afin que les lames d'extraction 61 maintiennent les piques 6 lors du début de l'opération d'embrochage, comme décrit ci-après.

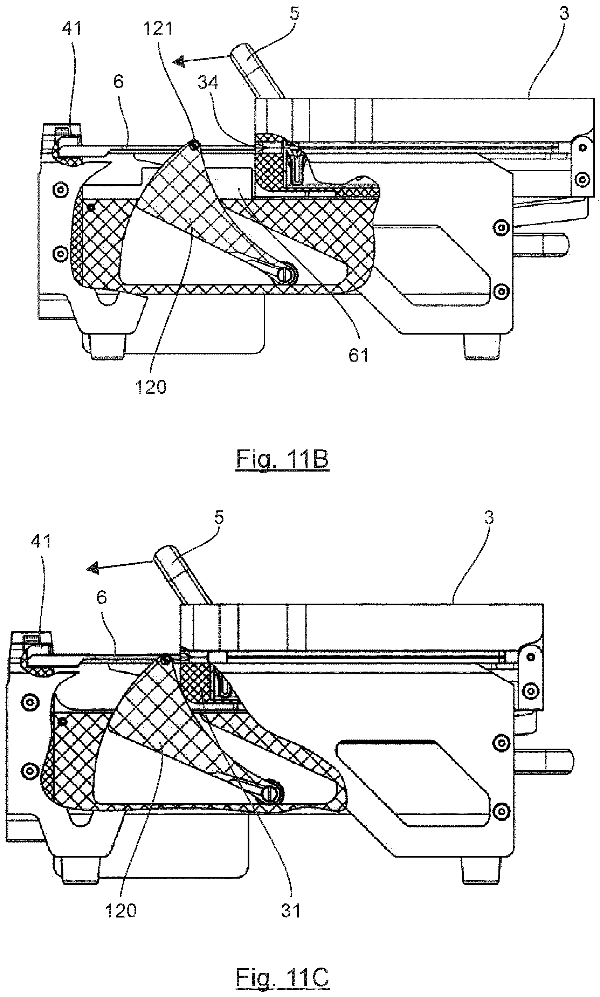

Lors de cette première phase d'avancement, les piques 6 s'introduisent dans les orifices 34 d'embrochage du chariot mobile 3. Lorsque les piques entrent en contact avec les premières denrées alimentaires, dans un premier temps, les piques 6 reculent légèrement et les têtes des piques en forme de drapeau dans cet exemple viennent se positionner dans les butées de positionnement 41 du module de butées 4 ([Fig.11B]). Ce n'est qu'après une telle mise en appui que les piques 6 commencent à s'embrocher dans les denrées alimentaires.

Sur la [Fig.11B], le guidage des piques au travers des denrées du chariot mobile se poursuit et la lame d'extraction 61 de chaque pique commence à s'abaisser alors que le doigt de maintien 121 correspondant reste en position haute. Chaque pique 6 se positionne en butée pour garantir un bon guidage dans l'orifice 34 d'embrochage correspondant du chariot mobile 3.

Au cours d'une deuxième phase d'avancement, initiée lorsque le chariot mobile 3 arrive à proximité des lames d'extraction 61, la descente rapide des lames d'extraction 61 survient, telle qu'illustrée en relation avec la [Fig.16].

Dans cette deuxième phase, le deuxième galet 8 emprunte le deuxième segment 941 du deuxième chemin 94. La pente du deuxième segment 941 du deuxième chemin 94 étant importante, tel que décrit en relation avec la [Fig.3D] notamment, le déplacement du deuxième galet engendre un pivotement rapide du levier de synchronisation 7. La première extrémité 71 du levier de synchronisation 7 déplace donc le premier galet 62 pour faire coulisser rapidement la traverse 60 le long des glissières 23. L'extracteur mobile de piques 6 quitte ainsi la position haute afin de permettre aux lames d'extraction 61 de se dégager rapidement tout en laissant les piques 6 en position d'embrochage. Une descente rapide des lames d'extraction 61 est nécessaire pour pallier leur immobilité lors de la première phase de descente afin d'éviter qu'elles ne percutent le chariot mobile 3 qui se déplace vers l'avant.

Lors de cette deuxième phase, les piques 6 continuent de s'insérer dans les cavités contenant les denrées alimentaires. Par ailleurs, les portions inférieures 64 des lames d'extraction 61 s'insèrent dans les fentes 102 correspondantes des compartiments 100 du réservoir 10.

Sur la [Fig.11C], le plateau inférieur 31 arrive en butée avec le levier 120 qui commence alors à pivoter autour de son axe de rotation dans le sens anti-horaire illustré par une flèche et à s'abaisser vers sa position escamotée. Le plateau inférieur 31 rentre donc en contact avec le levier 120 et exerce une force supérieure à celle du ressort 122 si bien que le levier 120 est contraint de pivoter vers sa position escamotée.

Au cours d'une troisième phase d'avancement, initiée lorsque les lames d'extraction 61 sont suffisamment éloignées du chariot mobile 3, le deuxième galet 8 emprunte le troisième segment 942 du deuxième chemin 94 jusqu'à atteindre la première extrémité 91 de la piste de synchronisation 9 pour ramener le dispositif 1 en position avancée. Du fait que le troisième segment 942 du deuxième chemin 94 correspondant à une portion du premier segment 930 du premier chemin 93 et présente de ce fait la même pente, tel que décrit en relation avec la [Fig.3D] notamment, le déplacement du deuxième galet provoque un pivotement lent du levier de synchronisation 7 et donc une descente lente de l'extracteur mobile de piques 6 et de ses lames d'extraction 61.

Lors cette troisième phase, les doigts de maintien 121 ne perturbent aucunement l'opération d'embrochage.

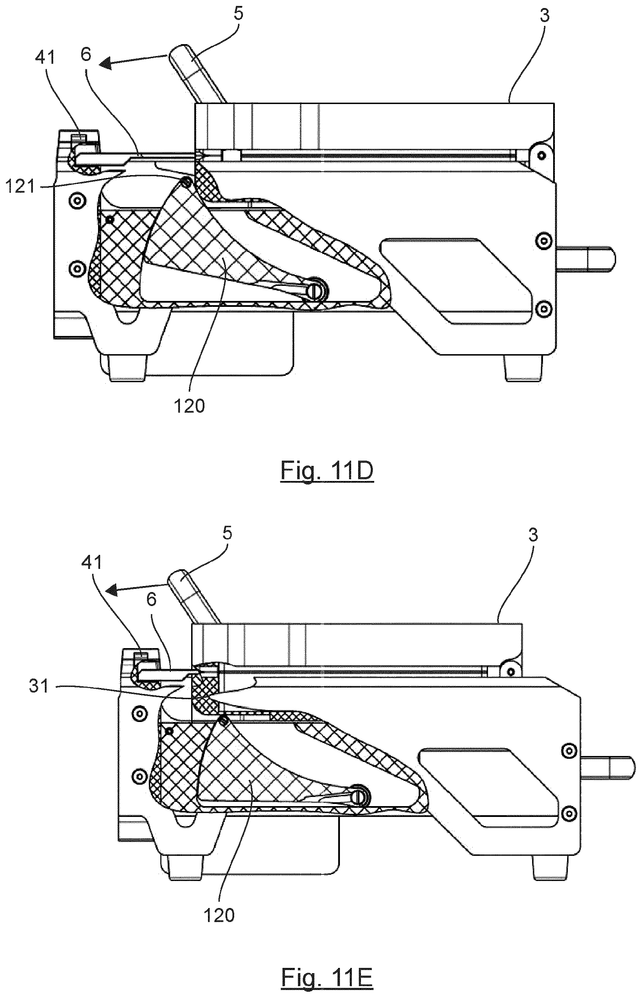

Sur la [Fig.11D], le point d'appui entre le plateau inférieur 31 et le levier 120 permet de pivoter encore ce dernier jusqu'à ce que le doigt de maintien 121 passe sous la pique 6 correspondante. Pour assurer ce passage du doigt de maintien du dessus de la pique 6 vers le dessous de celle-ci, le doigt de maintien 121 est soit escamotable (il peut être composé de deux parties articulées par exemple), soit flexible et réalisé dans une matière souple qui se déforme lors de la descente du levier 120 comme illustré sur les différentes vues de la [Fig.19].. Un mode de réalisation particulier du doigt de maintien 121 et de son montage sur un levier 120 est illustré sur les deux vues de la [Fig.9C]. Les vues a) à d) de la [Fig.19] montrent la déformation de la première portion cylindrique 121A d'extrémité du doigt de maintien 121 lors de la phase d'embrochage de la pique 6, cette première portion cylindrique 121A étant située au-dessus de la pique 6 sur la vue a) et en-dessous de cette dernière sur la vue d), la déformation de la première portion cylindrique 121A visible sur les vues b) et c) permettant de ne pas engendrer un effort trop important sur la pique 6. On note que la déformation du doigt de maintien 121 intervient une fois la pique 6 engagée dans l'orifice d'embrochage 34 du chariot mobile 3 (non visible sur ces vues) et une fois la lame d'extraction 61 abaissée.

On rappelle que le levier 120 est intégré dans le coté du réservoir à piques de façon à être le plus discret possible. La commande du levier 120 est faite par contact entre le plateau inférieur 31 et le levier 120, le plateau inférieur 31 formant came commandant le déplacement du levier 120. Un ressort 122 permet au levier 120 de s'orienter en position haute par défaut lorsque le plateau inférieur 31 est reculé et n'est plus en contact avec le levier 120.

A partir de la position de la [Fig.11E], le levier 120 et le doigt de maintien 121 ont atteint leur position basse, le doigt de maintien 121 étant passé sous la plateau inférieur 31 et l'extracteur poursuit sa descente dans le fond du réservoir 10.

La fin de course du chariot mobile 3 se fait sans mouvement du levier 120. En position de fin de course ([Fig.11F]), l'opérateur peut ouvrir le plateau supérieur, retirer les brochettes finies et recommencer un nouveau cycle.

Lorsque cette troisième phase d'avancement est finalisée, le dispositif 1 est alors en position initiale, et les piques 6 sont logées dans le chariot mobile 3 au travers des denrées alimentaires, les brochettes obtenues pouvant être alors récupérées par l'utilisateur.

La fabrication des brochettes peut alors être répétée selon l'ordre des étapes précédemment décrites.

On constate qu'avec un tel dispositif de fabrication de brochettes, la mise en place des piques en position d'embrochage se fait automatiquement sans intervention de l'opérateur.

En outre, la mise en place des piques est réalisée lors du déplacement du chariot mobile présentant les cavités contenant les denrées alimentaires. Cette mise en place automatique des piques ne rallonge pas la durée du processus de fabrication de brochettes mais, au contraire, le réduit. Cela se traduit notamment par un accroissement des cadences de fabrication et une amélioration du confort et des conditions de travail de l'opérateur.

Par ailleurs, excepté pour disposer les denrées alimentaires dans les cavités du chariot mobile, l'opérateur peut garder les mains sur la ou les poignées de manipulation pendant tout le processus de fabrication des brochettes. À nouveau, cela permet une amélioration du confort de l'opérateur. Les doigts de maintien permettent par ailleurs à l'opérateur de ne pas modifier son geste de peur qu'une pique tombe de l'extracteur. En effet, les doigts de maintien permettent de maintenir chaque pique sur la lame d'extraction correspondante quelle que soit la vitesse de déplacement du chariot mobile, avec ou sans accélération/décélération.

### Autres modes de réalisation et caractéristiques diverses

De préférence, les trous ménagés dans la traverse de l'extracteur mobile de piques qui sont configurés pour coopérer avec les tiges verticales du bâti, portent des douilles à billes pour assurer un guidage précis de l'extracteur mobile de piques par rapport au bâti.

Dans un mode de réalisation particulier, les portions inférieures des lames d'extraction sont réalisées en un matériau plastique afin de limiter le poids et les coûts de production du dispositif de fabrication de brochettes.

Selon des mises en œuvre particulières, non illustrés, les moyens permettant de synchroniser le déplacement de l'extracteur mobile de piques au déplacement du chariot mobile mettent en œuvre des moyens électroniques et/ou électromécaniques. Ainsi, les moyens de synchronisation comprennent, selon un mode de réalisation particulier, des premiers capteurs configurés pour déterminer la position horizontale du chariot mobile et la vitesse de déplacement de celui-ci, des deuxième capteurs configurés pour déterminer la position verticale des lames d'extraction et la vitesse de déplacement de celles-ci, au moins un actionneur, linéaire ou rotatif, configuré pour déplacer verticalement les lames d'extraction et une unité de traitement, tel un automate, configurée pour commander, en position et vitesse, le déplacement des lames d'extraction par rapport à la position et vitesse de déplacement du chariot mobile portant les plateaux.

Il est possible de ne pas mettre en œuvre de capteurs de vitesse.

Dans un mode de réalisation particulier, le dispositif comprend en outre une interface permettant à un opérateur de régler tout ou partie des paramètres de fonctionnement du dispositif, et en particulier les moyens de synchronisation électroniques. Par exemple, le dispositif peut comprendre des butées électroniquement réglables de manière à bloquer le coulissement du chariot mobile à une position prédéterminée en fonction de la longueur des piques saisie sur l'interface. Ainsi, l'amplitude de coulissement du chariot mobile sera réduite pour des piques courtes par exemple. Cela permet notamment d'améliorer le confort et la cadence de travail de l'opérateur et de minimiser les actions superflues.

Selon une mise en œuvre particulière, le réservoir de piques comprend un unique compartiment présentant un fond convexe et dont les parties basses se terminent par des fentes verticales.

Selon une approche particulière, non illustrée, la portion inférieure de chaque lame d'extraction présente sensiblement la forme d'un peigne de sorte à réduire davantage le poids du dispositif de fabrication de brochettes. Selon une autre approche particulière, non illustrée, chaque lame d'extraction et sa portion inférieure sont réalisées en une même pièce monobloc.

Bien évidemment, l'invention n'est pas limitée aux modes de réalisation décrits précédemment et fournis uniquement à titre d'exemples. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

Par exemple, l'homme du métier saura adapter la forme et la disposition de l'extracteur mobile de piques, ainsi que des éléments qui le composent, en fonction de la structure globale du dispositif de fabrication de brochettes, et notamment du nombre de brochettes que celui-ci doit fabriquer. Par exemple, si le dispositif de fabrication de brochettes est configuré pour permettre la fabrication simultanée de quatre brochettes, le dispositif peux comprendre deux supports mobiles de piques conforme à celui illustré ou un uniquement extracteur mobile de piques portant quatre lames d'extraction et un premier galet, voire plusieurs pour une meilleure répartition des efforts. L'homme du métier saura en outre déterminer la longueur et/ou la pente de chaque segment formant la piste de synchronisation de manière à obtenir le fonctionnement décrit en fonction des dimensions et des variantes structurelles du dispositif notamment.

Selon un autre exemple, la disposition du levier de synchronisation et de la piste de synchronisation est intervertie, en ménageant la piste de synchronisation dans/sur l'extracteur mobile et en fixant de manière pivotante le levier de synchronisation au chariot mobile. Selon un autre exemple encore, le dispositif de fabrication de brochettes comprend un support fixe portant les plateaux inférieur et supérieur et un bâti/châssis mobile. Ainsi, l'opérateur ne coulisse donc plus les plateaux mais le châssis mobile portant l'extracteur mobile de piques.

Plus généralement, la technique proposée couvre toutes les mises en œuvre du principe selon lequel le déplacement d'un organe d'extraction d'au moins une pique présente dans un réservoir et de positionnent de ladite au moins une pique en regard d'au moins une cavité des plateaux contenant les denrées alimentaires, est synchronisé au déplacement du chariot mobile portant les plateaux.

La solution de la technique proposée permet donc de disposer d'un dispositif de fabrication de brochettes permettant un positionnement automatique et immédiat des piques en position d'embrochage, sans intervention manuelle et minimisant les risques de chute des piques, en ce sens qu'il n'engendre aucune interruption, ou quasi aucune interruption, dans la manipulation du chariot mobile.

Le dispositif permet la fabrication de brochettes d'aliments de toutes formes tels que viandes et/ou légumes, poissons, fruits ou autres.

Les piques à brochette peuvent être en bois, bambou, plastique alimentaire ou métal, et peuvent être rectilignes ou bien présenter une tête ou embout d'extrémité de géométrie particulière (drapeau, anneau, triangle,...). La section des piques peut être carrée, rectangulaire, ronde ou ovale notamment. Plusieurs types de piques peuvent être utilisées durant une même session d'embrochage (un compartiment du réservoir peut comprendre un premier type de piques, et un autre compartiment du réservoir peut comprendre un deuxième type de piques).

Par ailleurs, le plateau supérieur peut se déplacer parallèlement au plateau inférieur et non pas de façon pivotante par rapport à ce dernier.

Selon différents aspects, la technique proposée présente donc tout ou partie des avantages suivants, en fonction des modes de réalisation retenus :
- permettre la mise en place automatique et rapide des piques en position d'embrochage ;
- garantir l'autonomie du dispositif de fabrication d'au moins une brochette par rapport à des systèmes et/ou installations extérieur ;
- permettre une utilisation simplifiée ;
- permettre un encombrement limité ;
- permettre un transport aisé ;
- permettre une installation simplifiée et rapide ;
- garantir une longévité importante ;
- garantir une maintenance simplifiée ;
- améliorer le confort de l'opérateur ;
- garantir la sécurité de l'opérateur ;
- limiter les pertes de consommables ;
- etc.

## Revendications

1. Dispositif (1) de fabrication d'au moins une brochette d'aliments à partir de plusieurs types de piques, comprenant un bâti (2) et un chariot mobile (3) monté mobile en coulissement sur le bâti (2) entre une position avant (P_{AV}) et une position arrière (P_{AR}), et inversement, ledit chariot mobile (3) comprenant un plateau inférieur (31) coopérant avec un plateau supérieur (32), formant couvercle, le plateau supérieur (32) étant monté mobile entre une position ouverte (P_{O}) et une position fermée ou rabattue (P_{F}), les plateaux inférieur et supérieur (31, 32) présentant des renfoncements de réception de denrées alimentaires formant au moins une rangée de cavités alignées lorsque le plateau supérieur (32) est rabattu sur le plateau inférieur (31) et au moins un orifice (34) de passage d'une pique (6) débouchant dans l'axe de ladite au moins une rangée de cavités alignées, l'embrochage de ladite au moins une pique (6) dans les denrées alimentaires logées dans ladite au moins une rangée de cavités alignées s'effectuant en déplaçant le chariot mobile (3) de la position arrière (P_{AR}) vers la position avant (P_{AV}), ledit dispositif (1) étant **caractérisé en ce qu'**il comprend :
- au moins un réservoir (10) de piques (6) et un extracteur mobile de piques (6) configuré pour prélever sélectivement au moins une pique (6) dans ledit au moins un réservoir (10) et pour extraire ladite au moins une pique (6) hors dudit réservoir (10) de sorte à la positionner en position d'embrochage en regard dudit au moins un orifice (34) lorsque le chariot mobile (3) est en position arrière (P_{AR}),
- des moyens de synchronisation configurés pour synchroniser le déplacement dudit extracteur mobile de piques (6) au déplacement dudit chariot mobile (3), et
- des moyens de maintien (12) de ladite au moins une pique (6) sur l'extracteur mobile de piques (6) en position d'embrochage, lesdits moyens de maintien (6) étant mobiles entre une position escamotée où ils ne coopèrent pas avec la pique (6) et la position déployée où ils maintiennent la pique (6) en position d'embrochage, le déplacement desdits moyens de maintien (12) de la pique (6) entre les positions escamotée et déployée étant commandé par le déplacement dudit chariot mobile (3).

2. Dispositif (1) de fabrication d'au moins une brochette d'aliments selon la revendication 1, **caractérisé en ce que** les moyens de maintien (12) comprennent au moins un doigt de maintien (121) situé au-dessus de ladite au moins une pique (6) en position d'embrochage.

3. Dispositif (1) de fabrication d'au moins une brochette d'aliments selon la revendication 2, **caractérisé en ce que**, lors de l'embrochage, lorsque le chariot mobile (3) est déplacé de la position arrière (P_{AR}) vers la position avant (P_{AV}) et lesdits moyens de maintien (12) passent de la position déployée à la position escamotée, le doigt de maintien (121) se déforme pour passer sous la pique (6).

4. Dispositif (1) de fabrication d'au moins une brochette d'aliments selon la revendication 3, **caractérisé en ce que** le doigt de maintien (121) présente une portion flexible en matériau souple.

5. Dispositif (1) de fabrication d'au moins une brochette d'aliments selon la revendication 3, **caractérisé en ce que** le doigt de maintien (121) est en plusieurs parties articulées.

6. Dispositif (1) de fabrication d'au moins une brochette d'aliments selon l'une des revendications 2 à 5, **caractérisé en ce que** le doigt de maintien (121) est monté sur un levier (120) pivotant qui est maintenu en position déployée par au moins un élément à ressort (122) lorsque le chariot mobile (3) est dans la position arrière (P_{AR}) et qui est commandé en déplacement de sa position déployée à sa position escamotée par contact avec le plateau inférieur (31) du chariot mobile (3) lorsque le chariot mobile (3) est déplacé de la position arrière (P_{AR}) vers la position avant (P_{AV})

7. Dispositif (1) de fabrication d'au moins une brochette d'aliments selon l'une des revendications 1 à 6, **caractérisé en ce que** ledit extracteur mobile de piques (6) est monté mobile en coulissement sur le bâti (2) entre une position basse et une position haute , l'extraction et le positionnement des piques (P) en regard dudit au moins un orifice (34) ou en position d'embrochage s'effectuant par le déplacement dudit extracteur mobile de piques (6) de la position basse vers la position haute, et **en ce que** lesdits moyens de synchronisation sont configurés pour synchroniser :
- la montée dudit extracteur mobile de piques (6) de la position basse vers la position haute avec le déplacement dudit chariot mobile (3) de la position avant (P_{AV}) vers la position arrière (P_{AR}), correspondant à un recul du chariot mobile (3), les moyens de maintien (12) étant pilotés de leur position escamotée vers leur position déployée par le déplacement dudit chariot mobile (3) de la position avant (P_{AV}) vers la position arrière (P_{AR}) avant que l'extracteur mobile de piques (6) atteigne la position haute, et
- la descente dudit extracteur mobile de piques (6) de la position haute vers la position basse avec le déplacement dudit chariot mobile (3) de la position arrière (P_{AR}) vers la position avant (P_{AV}), correspondant à un avancement dudit chariot mobile (3), les moyens de maintien (12) étant pilotés de leur position déployée vers leur position escamotée par le déplacement dudit chariot mobile (3) de la position arrière (P_{AR}) vers la position avant (P_{AV}) une fois que l'extracteur mobile de piques (6) descend de la position haute vers la position basse.

8. Dispositif (1) de fabrication d'au moins une brochette d'aliments selon la revendication 7, **caractérisé en ce que** ledit extracteur mobile de piques (6) comprend en outre au moins une lame d'extraction (61) d'une pique présentant sur sa face supérieure une gorge (611) de réception et de maintien d'une pique (6) du réservoir (10), la gorge (611) comprenant sur chacun de ses côtés un rebord incliné vers l'extérieur de la gorge.

9. Dispositif (1) de fabrication d'au moins une brochette d'aliments selon la revendication 8, **caractérisé en ce que** lame d'extraction (61) présente une encoche (612) de réception de la tête d'une pique (6) en forme de drapeau.

10. Dispositif (1) de fabrication d'au moins une brochette d'aliments selon la revendication 8 ou 9, **caractérisé en ce que** ledit bâti (2) comprend un module de butées (4) réversible présentant sur chacune de ses deux faces, un type particulier de butée de positionnement (4) d'une pique (6) contre laquelle la pique, disposée dans la gorge (611) de réception et de maintien de ladite au moins une lame d'extraction (61) en position haute dudit extracteur mobile de piques (6), vient en appui en début d'embrochage de la pique (6) dans les denrées alimentaires logées dans ladite au moins une rangée de cavités alignées.

11. Dispositif (1) de fabrication d'au moins une brochette d'aliments selon l'une quelconque des revendications 6 à 10, **caractérisé en ce que** le levier (120) et le ressort sont montés dans une paroi latérale (103) dudit au moins un réservoir (10) de piques (6), ledit levier (120) étant logé dans ladite paroi latérale (103) en position escamotée.

12. Dispositif (1) de fabrication d'au moins une brochette d'aliments selon l'une quelconque des revendications 8 à 11, **caractérisé en ce que** le réservoir (10) de piques (6) comprend au moins un compartiment (100) pourvu d'un fond (101) présentant deux surfaces inclinées convergeant dans la partie la plus basse du compartiment (100) vers une fente (102) de réception d'une lame d'extraction (61) en position basse, les extrémités inférieures des deux surfaces inclinées étant décalées d'une hauteur (h) prédeterminée.

## Patentansprüche

1. Vorrichtung (1) zur Herstellung mindestens eines mit Lebensmitteln bestückten Spießes aus mehreren Spießtypen, umfassend einen Rahmen (2) und einen beweglichen Schlitten (3), der gleitbeweglich zwischen einer vorderen Position (P_{AV}) und einer hinteren Position (P_{AR}), und umgekehrt, auf dem Rahmen (2) montiert ist, wobei der bewegliche Schlitten (3) eine untere Platte (31) umfasst, die mit einer oberen Platte (32), die einen Deckel bildet, zusammenwirkt, wobei die obere Platte (32) zwischen einer offenen Position (P_{O}) und einer geschlossenen oder umgelegten Position (P_{F}) beweglich montiert ist, wobei die untere und die obere Platte (31, 32) Vertiefungen zur Aufnahme von Lebensmitteln aufweisen, die mindestens eine Reihe fluchtender Hohlräume bilden, wenn die obere Platte (32) auf der unteren Platte (31) aufliegt, und mindestens eine Öffnung (34) für den Durchgang eines Spießes (6), die in der Achse der mindestens einen Reihe der fluchtenden Hohlräume mündet, wobei das Aufspießen des mindestens einen Spießes (6) in die Lebensmittel, die in der mindestens einen Reihe der fluchtenden Hohlräume angeordnet sind, durch Verlagern des beweglichen Schlittens (3) von der hinteren Position (P_{AR}) in die vordere Position (P_{AV}) erfolgt, wobei die Vorrichtung (1) **dadurch gekennzeichnet ist, dass** sie umfasst:
- mindestens einen Behälter (10) mit Spießen (6) und eine bewegliche Entnahmevorrichtung für die Spieße (6), die dazu eingerichtet ist, selektiv mindestens einen Spieß (6) aus dem mindestens einen Behälter (10) zu entnehmen, und den mindestens einen Spieß (6) aus dem Behälter (10) derart herauszuziehen, dass er in Aufspießposition gegenüber der mindestens einen Öffnung (34) positioniert wird, wenn sich der bewegliche Schlitten (3) in der hinteren Position (P_{AR}) befindet,
- Synchronisierungsmittel, die dazu eingerichtet sind, die Verlagerung der beweglichen Entnahmevorrichtung für die Spieße (6) mit der Verlagerung des beweglichen Schlittens (3) zu synchronisieren, und
- Mittel (12) zum Halten des mindestens einen Spießes (6) auf der beweglichen Entnahmevorrichtung für die Spieße (6) in Aufspießposition, wobei die Haltemittel zwischen einer eingezogenen Position, in der sie nicht mit dem Spieß (6) zusammenwirken, und einer ausgefahrenen Position, in der sie den Spieß (6) in Aufspießposition halten, beweglich sind, wobei die Verlagerung der Haltemittel (12) des Spießes (6) zwischen der eingezogenen und der ausgefahrenen Position durch die Verlagerung des beweglichen Schlittens (3) gesteuert wird.

2. Vorrichtung (1) zur Herstellung mindestens eines mit Lebensmitteln bestückten Spießes nach Anspruch 1, **dadurch gekennzeichnet, dass** die Haltemittel (12) mindestens einen Haltefinger (121) umfassen, der sich über dem mindestens einen Spieß (6) in Aufspießposition befindet.

3. Vorrichtung (1) zur Herstellung mindestens eines mit Lebensmitteln bestückten Spießes nach Anspruch 2, **dadurch gekennzeichnet, dass** sich der Haltefinger (121) beim Aufspießen verformt, wenn der bewegliche Schlitten (3) von der hinteren Position (P_{AR}) in die vordere Position (P_{AV}) verlagert wird und die Haltemittel (12) von der ausgefahrenen Position in die eingezogene Position übergehen, um unter den Spieß (6) zu gelangen.

4. Vorrichtung (1) zur Herstellung mindestens eines mit Lebensmitteln bestückten Spießes nach Anspruch 3, **dadurch gekennzeichnet, dass** der Haltefinger (121) einen biegsamen Abschnitt aus weichem Material aufweist.

5. Vorrichtung (1) zur Herstellung mindestens eines mit Lebensmitteln bestückten Spießes nach Anspruch 3, **dadurch gekennzeichnet, dass** der Haltefinger (121) aus mehreren gelenkigen Teilen besteht.

6. Vorrichtung (1) zur Herstellung mindestens eines mit Lebensmitteln bestückten Spießes nach einem der Ansprüche 2 bis 5, **dadurch gekennzeichnet, dass** der Haltefinger (121) auf einem schwenkbaren Hebel (120) montiert ist, der durch mindestens ein Federelement (122) in der ausgefahrenen Position gehalten wird, wenn sich der bewegliche Schlitten (3) in der hinteren Position (P_{AR}) befindet, und der bei der Verlagerung von seiner ausgefahrenen Position in seine eingezogene Position durch Kontakt mit der unteren Platte (31) des beweglichen Schlittens (3) gesteuert wird, wenn der bewegliche Schlitten (3) von der hinteren Position (P_{AR}) in die vordere Position (P_{AV}) verlagert wird.

7. Vorrichtung (1) zur Herstellung mindestens eines mit Lebensmitteln bestückten Spießes nach einem der Ansprüche 1 bis 6, **dadurch gekennzeichnet, dass** die bewegliche Entnahmevorrichtung für die Spieße (6) gleitend zwischen einer unteren Position und einer oberen Position auf dem Rahmen (2) montiert ist, wobei die Entnahme und Positionierung der Spieße (P) gegenüber der mindestens einen Öffnung (34) oder in Aufspießposition durch die Verlagerung der beweglichen Entnahmevorrichtung für die Spieße (6) von der unteren Position in die obere Position erfolgt, und dass die Synchronisierungsmittel eingerichtet sind zum Synchronisieren:
- des Hochfahrens der Entnahmevorrichtung für die Spieße (6) von der unteren Position in die obere Position mit der Verlagerung des beweglichen Schlittens (3) von der vorderen Position (P_{AV}) in die hintere Position (P_{AR}), was einem Zurückschieben des beweglichen Schlittens (3) entspricht, wobei die Haltemittel (12) von ihrer eingezogenen Position in ihre ausgefahrene Position durch die Verlagerung des beweglichen Schlittens (3) von der vorderen Position (P_{AV}) in die hintere Position (P_{AR}) gesteuert werden, bevor die bewegliche Entnahmevorrichtung für die Spieße (6) die obere Position erreicht, und
- des Hinunterfahrens der beweglichen Entnahmevorrichtung für die Spieße (6) von der oberen Position in die untere Position mit der Verlagerung des beweglichen Schlittens (3) von der hinteren Position (P_{AR}) in die vordere Position (P_{AV}) was einem Vorschieben des beweglichen Schlittens (3) entspricht, wobei die Haltemittel (12) von ihrer ausgefahrenen Position in ihre eingezogene Position durch die Verlagerung des beweglichen Schlittens (3) von der hinteren Position (P_{AR}) in die vordere Position (P_{AV}) gesteuert werden, wenn die bewegliche Entnahmevorrichtung für die Spieße (6) von der oberen Position in die untere Position hinunterfährt.

8. Vorrichtung (1) zur Herstellung mindestens eines mit Lebensmitteln bestücken Spießes nach Anspruch 7, **dadurch gekennzeichnet, dass** die bewegliche Entnahmevorrichtung für die Spieße (6) ferner mindestens eine Klinge (61) zur Entnahme eines Spießes umfasst, die auf ihrer Oberseite eine Rille (611) zum Aufnehmen und Halten eines Spießes (6) aus dem Behälter (10) aufweist, wobei die Rille (611) auf jeder ihrer Seiten einen nach außen zur Rille geneigten Rand umfasst.

9. Vorrichtung (1) zur Herstellung mindestens eines mit Lebensmitteln bestückten Spieles nach Anspruch 8, **dadurch gekennzeichnet, dass** die Entnahmeklinge (61) eine Kerbe (612) für die Aufnahme des Kopfes eines Spießes (6) in Flaggenform aufweist.

10. Vorrichtung (1) zur Herstellung mindestens eines mit Lebensmitteln bestückten Spießes nach Anspruch 8 oder 9, **dadurch gekennzeichnet, dass** der Rahmen (2) ein umkehrbares Anschlagmodul (4) umfasst, das auf jeder seiner zwei Seiten einen besonderen Anschlagtyp (4) zur Positionierung eines Spießes (6) aufweist, an den der Spieß, der in der Rille (611) zum Aufnehmen und Halten der mindestens einen Entnahmeklinge (61) in der oberen Position der beweglichen Entnahmevorrichtung für die Spieße (6) zu Beginn des Aufspießens des Spießes (6) in die in der mindestens einen Reihe von ausgerichteten Hohlräumen angeordneten Lebensmittel zur Anlage gelangt.

11. Vorrichtung (1) zur Herstellung mindestens eines mit Lebensmitteln bestückten Spießes nach einem der Ansprüche 6 bis 10, **dadurch gekennzeichnet, dass** der Hebel (120) und die Feder in einer Seitenwand (103) des mindestens einen Behälters (10) von Spießen (6) montiert sind, wobei der Hebel (120) in eingezogener Position in der Seitenwand (103) angeordnet ist.

12. Vorrichtung (1) zur Herstellung mindestens eines mit Lebensmitteln bestückten Spießes nach einem der Ansprüche 8 bis 11, **dadurch gekennzeichnet, dass** der Behälter (10) mit Spießen (6) mindestens ein Abteil (100) umfasst, das mit einem Boden (101) versehen ist, der zwei geneigte Flächen aufweist, die in dem untersten Teil des Abteils (100) zu einem Schlitz (102) für die Aufnahme einer Entnahmeklinge (61) in der unteren Position hin zusammenlaufen, wobei die unteren Enden der zwei geneigten Flächen um eine vorbestimmte Höhe (h) versetzt sind.

## Claims

1. Device (1) for manufacturing at least one brochette of food using several types of skewer, comprising a frame (2) and a movable carriage (3) mounted so as to be able to move slidably on the frame (2) between a forward position (P_{AV}) and a rear position (P_{AR}), and vice versa, said movable carriage (3) comprising a lower plate (31) cooperating with an upper plate (32), forming a cover, the upper plate (32) being mounted so as to be able to move between an open position (P_{O}) and a closed or folded position (P_{F}), the lower and upper plates (31, 32) having recesses for receiving foodstuffs forming at least one row of aligned cavities when the upper plate (32) is folded over the lower plate (31), and at least one orifice (34) for a skewer (6) to pass, emerging in line with the at least one row of aligned cavities, the skewering of said at least one skewer (6) in the foodstuffs housed in the at least one row of aligned cavities being implemented by moving the movable carriage (3) from the rear position (P_{AR}) towards the forward position (P_{AV}),
said device (1) being **characterised in that** it comprises:
- at least one container (10) of skewers (6) and a movable picker of skewers (6) configured to selectively take at least one skewer (6) in said at least one container (10) and to extract said at least one skewer (6) out of said container (10) so as to position it in a skewering position facing said at least one orifice (34) when the movable carriage (3) is in the rear position (P_{AR}),
- synchronisation means configured to synchronise the movement of said movable picker of skewers (6) with the movement of said movable carriage (3), and
- means (12) for holding said at least one skewer (6) on the movable picker of skewers (6) in the skewering position, said holding means (6) being able to move between a retracted position where they do not cooperate with the skewer (6) and the deployed position where they hold the skewer (6) in the skewering position, the movement of said means (12) of holding the skewer (6) between the retracted and deployed positions being controlled by the movement of said movable carriage (3).

2. Device (1) for manufacturing at least one brochette of food according to claim 1, **characterised in that** the holding means (12) comprise at least one holding finger (121) located above said at least one skewer (6) in the skewering position.

3. Device (1) for manufacturing at least one brochette of food according to claim 2, **characterised in that**, during skewering, when the movable carriage (3) is moved from the rear position (P_{AR}) towards the forward position (P_{AV}) and said holding means (12) pass from the deployed position to the retracted position, the holding finger (121) deforms in order to pass under the skewer (6).

4. Device (1) for manufacturing at least one brochette of food according to claim 3, **characterised in that** the holding finger (121) has a flexible portion made from supple material.

5. Device (1) for manufacturing at least one brochette of food according to claim 3, **characterised in that** the holding finger (121) is in several hinged parts.

6. Device (1) for manufacturing at least one brochette of food according to one of claims 2 to 5, **characterised in that** the holding finger (121) is mounted on a pivoting lever (120) that is held in deployed position by at least one spring element (122) when the movable carriage (3) is in the rear position (P_{AR}) and is controlled for movement from its deployed position to its retracted position by contact with the lower plate (31) of the movable carriage (3) when the movable carriage (3) is moved from the rear position (P_{AR}) towards the forward position (P_{AV}).

7. Device (1) for manufacturing at least one brochette of food according to one of claims 1 to 6, **characterised in that** said movable picker of skewers (6) is mounted so as to be able to slide on the frame (2) between a low position and a high position, the extraction and the positioning of the skewers (P) facing said at least one orifice (34) or in the skewering position being implemented by the movement of said movable picker of skewers (6) from the low position to the high position,
and **in that** said synchronisation means are configured to synchronise:
- the rise of said movable picker of skewers (6) from the low position to the high position with the movement of said movable carriage (3) from the forward position (P_{AV}) to the rear position (P_{AR}), corresponding to a retraction of the movable carriage (3), the holding means (12) being driven from their retracted position to their deployed position by the movement of said movable carriage (3) from the forward position (P_{AV}) to the rear position (P_{AR}) before the movable picker of skewers (6) reaches the high position, and
- the descent of said movable picker of skewers (6) from the high position to the low position with the movement of said movable carriage (3) from the rear position (P_{AR}) to the forward position (P_{AV}) corresponding to an advance of said movable carriage (3), the holding means (12) being driven from their deployed position to their retracted position by the movement of said movable carriage (3) from the rear position (P_{AR}) to the forward position (P_{AV}) once the movable picker of skewers (6) descends from the high position to the low position.

8. Device (1) for manufacturing at least one brochette of food according to claim 7, **characterised in that** said movable picker of skewers (6) furthermore comprises at least one blade (61) for extracting a skewer having on its upper face a groove (611) for receiving and holding a skewer (6) from the container (10), the groove (611) comprising, on each of its sides, a rim inclined towards the outside of the groove.

9. Device (1) for manufacturing at least one brochette of food according to claim 8, **characterised in that** the extraction blade (61) has a notch (612) for receiving the head of a skewer (6) in the form of a flag.

10. Device (1) for manufacturing at least one brochette of food according to claim 8 or 9, **characterised in that** said frame (2) comprises a reversible-stop module (4) having, on each of its two faces, a particular type of stop (4) for positioning a skewer (6) against which the skewer, disposed in the reception and holding groove (611) of said at least one extraction blade (61) in the high position of said movable picker of skewers (6), comes into abutment at the start of skewering of the skewer (6) in the foodstuffs housed in said at least one row of aligned cavities.

11. Device (1) for manufacturing at least one brochette of food according to any one of claims 6 to 10, **characterised in that** the lever (120) and the spring are mounted in a lateral wall (103) of said at least one container (10) of skewers (6), said lever (120) being housed in said lateral wall (103) in the retracted position.

12. Device (1) for manufacturing at least one brochette of food according to any one of claims 8 to 11, **characterised in that** the container (10) of skewers (6) comprises at least one compartment (100) provided with a bottom (101) having two inclined surfaces converging in the lowest part of the compartment (100) towards a slot (102) receiving an extraction blade (61) in the low position, the lower ends of the two inclined surfaces being offset by a predetermined height (h).
